# EUROPEAN PATENT APPLICATION

(11) **EP 4 807 683 A1**
(43) Date of publication of application: **16.09.2026**
(21) Application number: 24898138.3
(22) Date of filing: 27.11.2024
(51) Int. Cl.: G06T 15/10, G06T 7/593, G06V 30/10, H04N 13/117, H04N 13/332, G02B 27/01, H04N 13/383, G06T 13/40

(54) **ELECTRONIC DEVICE, METHOD, AND COMPUTER-READABLE MEDIUM FOR RENDERING IMAGES**

(30) Priority: 28.11.2023 KR 20230168696; 24.04.2024 KR 20240055011
(71) Applicant: Samsung Electronics Co., Ltd., Suwon-si, Gyeonggi-do 16677 (KR)
(72) Inventor: SONG, Jaeyun, Suwon-si Gyeonggi-do 16677 (KR); YEOM, Donghyun, Suwon-si Gyeonggi-do 16677 (KR); KIM, Kihwan, Suwon-si Gyeonggi-do 16677 (KR); KIM, Sungoh, Suwon-si Gyeonggi-do 16677 (KR); MIN, Kyungchel, Suwon-si Gyeonggi-do 16677 (KR); LEE, Jinsuk, Suwon-si Gyeonggi-do 16677 (KR); CHOI, Byungpo, Suwon-si Gyeonggi-do 16677 (KR)
(74) Representative: Gulde & Partner
(86) International application number: PCT/KR2024/019055
(87) International publication number: WO 2025/116544

(57) **Abstract**

In embodiments, an electronic device is provided. The electronic device may comprise: at least one display; at least one processor including a processing circuit; and a memory storing instructions and including one or more storage media. The instructions, when executed individually or collectively by the at least one processor, may instruct the electronic device to: obtain depth information about an area in which an application is to be rendered in a three-dimensional space in response to execution of the application configured to provide a two-dimensional image; determine resolution information for the application according to the depth information about the area; convert image information corresponding to the two-dimensional image of the application generated according to the resolution information into dual image information corresponding to images for both eyes; and display a rendered image on the at least one display on the basis of the dual image information.

## Description

### [Technical Field]

The present disclosure relates to an electronic device, a method, and a computer-readable medium for rendering an image.

### [Background Art]

In order to provide an enhanced user experience, an electronic device providing an augmented reality (AR) service for displaying information generated by a computer in association with an external object in a real-world is being developed. The electronic device may provide the augmented reality service to a user by using a virtual object corresponding to the user.

The above-described information may be provided as a related art for the purpose of helping understanding of the present disclosure. No argument or decision is made as to whether any of the above description may be applied as a prior art related to the present disclosure.

### [Disclosure]

### [Technical Solution]

In embodiments, an electronic device is provided. The electronic device may comprise at least one display, at least one processor comprising processing circuitry, and memory, comprising one or more storage mediums, storing instructions. The instructions, when executed by the at least one processor individually or collectively, may cause the electronic device to, in response to execution of an application configured to provide a two-dimensional image, obtain depth information for an area on which the application is to be rendered in a three-dimensional space, determine resolution information for the application in accordance with the depth information for the area, convert image information corresponding to the two-dimensional image of the application, generated in accordance with the resolution information, into dual image information corresponding to images for two eyes, and display, through the at least one display, a rendering image based on the dual image information.

In embodiments, a method performed by an electronic device is provided. The method may comprise, in response to execution of an application configured to provide a two-dimensional image, obtaining depth information for an area on which the application is to be rendered in a three-dimensional space, determining resolution information for the application in accordance with the depth information for the area, converting image information corresponding to the two-dimensional image of the application, generated in accordance with the resolution information, into dual image information corresponding to images for two eyes, and displaying a rendering image based on the dual image information.

In embodiments, a non-transitory computer readable medium is provided. The non-transitory computer readable medium may comprise memory, comprising one or more storage mediums, configured to store instructions. The instructions, when executed by at least one processor individually or collectively, may cause an electronic device to, in response to execution of an application configured to provide a two-dimensional image, obtain depth information for an area on which the application is to be rendered in a three-dimensional space, determine resolution information for the application in accordance with the depth information for the area, convert image information corresponding to the two-dimensional image of the application, generated in accordance with the resolution information, into dual image information corresponding to images for two eyes, and display a rendering image in accordance with the dual image information.

In embodiments, an electronic device is provided. The electronic device may comprise at least one display and at least one processor comprising processing circuitry. The at least one processor may be configured to, in response to execution of an application configured to provide a two-dimensional image, obtain depth information for an area on which the application is to be rendered in a three-dimensional space, determine resolution information for the application in accordance with the depth information for the area, convert image information corresponding to the two-dimensional image of the application, generated in accordance with the resolution information, into dual image information corresponding to images for two eyes, and display, through the at least one display, a rendering image based on the dual image information.

In embodiments, an electronic device is provided. The electronic device may comprise a spatialization manager for obtaining spatial information for an application, a resolution manager for determining a resolution for the application, and a virtual space manager for providing an image for the application in a virtual space to a display buffer. The spatialization manager may be configured to obtain depth information for an area on which the application is to be rendered in a three-dimensional space. The resolution manager may be configured to, in accordance with the depth information for the area on which the application is to be rendered, determine resolution information for the application, and provide the resolution information for the determined application to the application. The spatialization manager may be configured to, by the application, convert image information generated in accordance with the resolution information into dual image information corresponding to images for two eyes. The virtual space manager may be configured to provide rendering images in accordance with the dual image information to the display buffer.

### [Description of the Drawings]

FIG. 1 is a block diagram of an electronic device in a network environment.
FIG. 2A illustrates an example of a perspective view of a wearable device.
FIG. 2B illustrates an example of one or more hardware disposed in a wearable device.
FIGS. 3A to 3B illustrate an example of an exterior of a wearable device.
FIG. 4 illustrates an example of a block diagram of a wearable device.
FIG. 5 illustrates an example of a block diagram of an electronic device for displaying an image in a virtual space.
FIGS. 6A and 6B illustrate examples of block diagrams of an electronic device for controlling a resolution of an image in a virtual space.
FIG. 7 illustrates examples of an application displayed in a virtual space.
FIG. 8 illustrates an example of images for foveated rendering.
FIG. 9 illustrates an example of a resolution change in accordance with movement of an application in a virtual space.
FIG. 10 illustrates an operation flow of an electronic device for controlling a resolution of an application in a virtual space.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a space (e.g., a plane, an object, a shape, a surface, a figure, a three-dimensional figure, an area, an occupied area, a position, a depth, or a distance), a term referring to a distance (e.g., a position, a distance, a depth, depth information, distance information, a distance value, a depth value, position information, position data, or depth data), a term referring to an application (e.g., an app, a program, an app activity, an application activity, an activity, a function), a term referring to a value (e.g., a threshold value, a reference value, a reference area, a reference range, a level, a threshold, a range, a value, or an area), a term for a computation state (e.g., a step, an operation, or a procedure), a term referring to network entities, a term referring to a component of a device, and the like, which are used in the following description, are exemplified for convenience of description. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

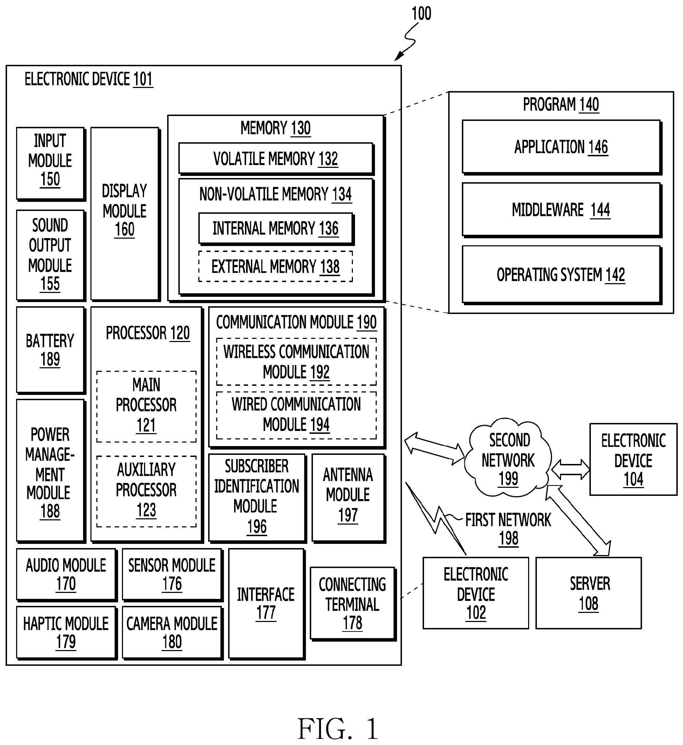

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

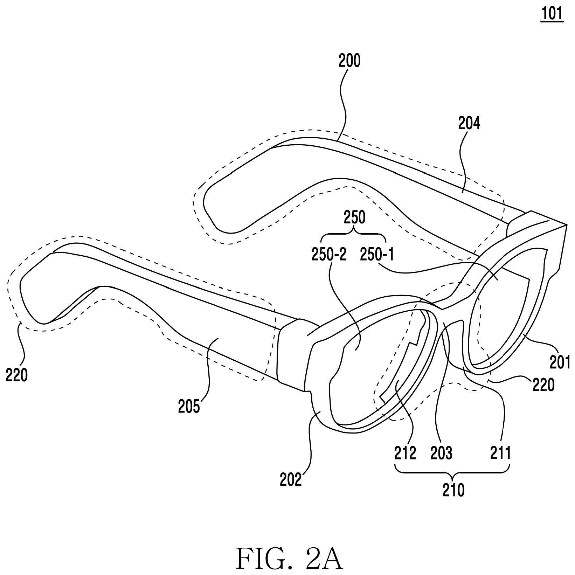

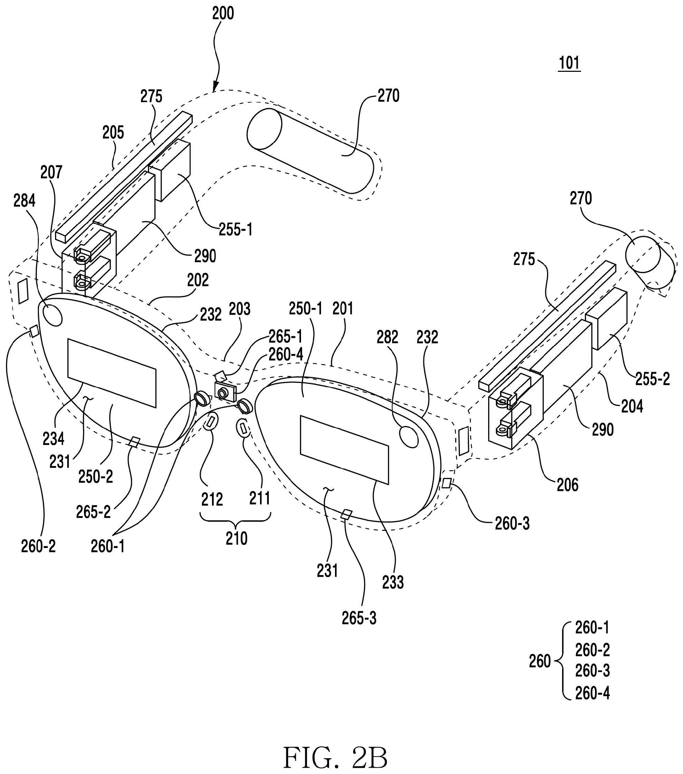

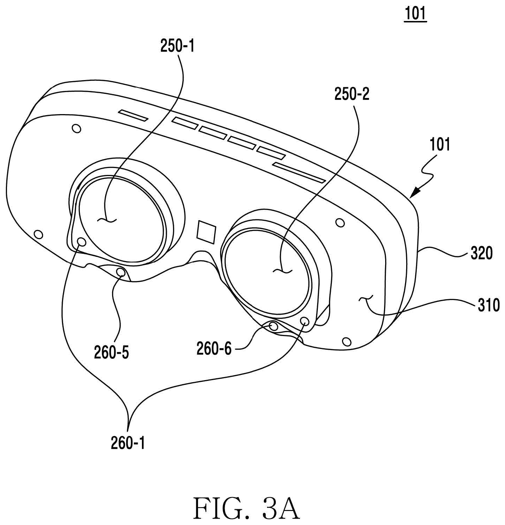

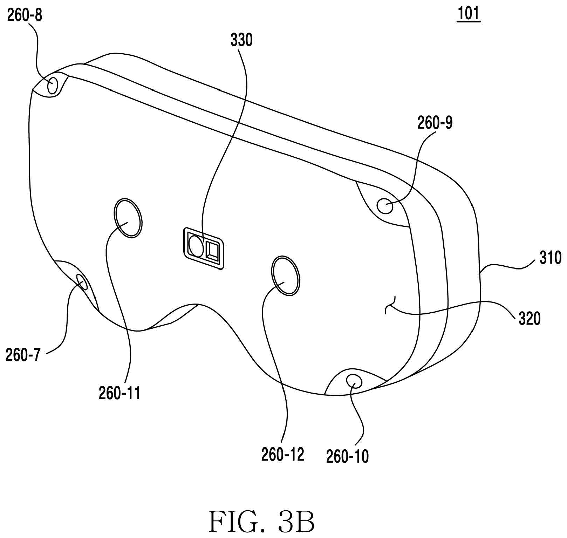

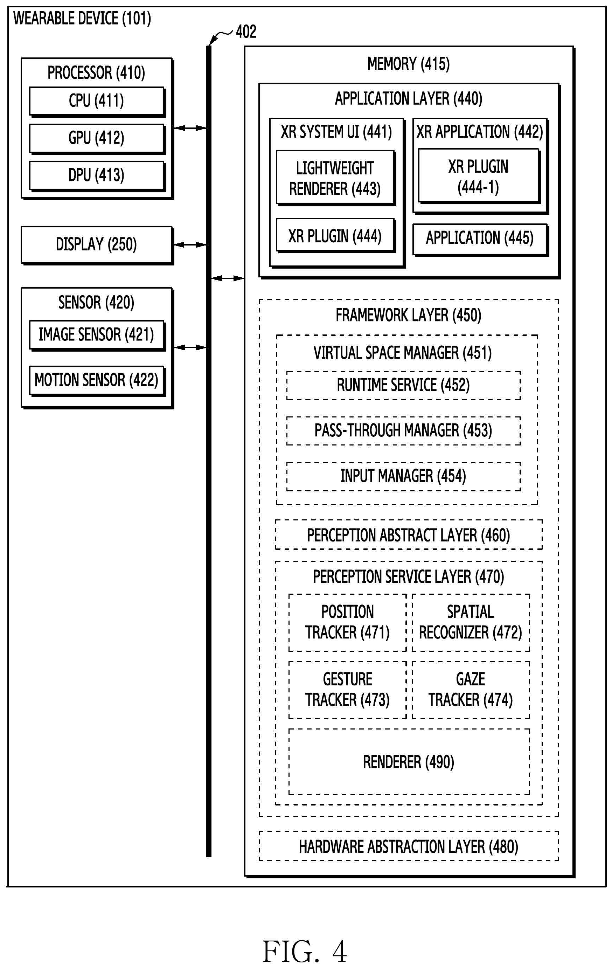

In embodiments of the present disclosure, an electronic device (e.g., the electronic device 101 of FIG. 1) for displaying an image in a virtual space may be a wearable device. The wearable device 101 may include a head-mounted display (HMD) wearable on a head of a user. The wearable device 101 may be referred to as a head-mount device (HMD), a headgear electronic device, a glasses-type electronic device, a video see-through (or visible see-through) (VST) device, an extended reality (XR) device, a virtual reality (VR) device, and/or an augmented reality (AR) device. Although an exterior of the wearable device 101 having a form of glasses is illustrated, an embodiment is not limited thereto. An example of a hardware configuration included in the wearable device 101 will be exemplarily described with reference to FIG. 4. An example of a structure of the wearable device 101 wearable on a head of a user 110 will be described with reference to FIG. 2A, FIG. 2B, FIG. 3A, and/or FIG. 3B. The wearable device 101 may be referred to as an electronic device. For example, the electronic device may be coupled with an accessory (e.g., a strap) to be attached to the head of the user to form an HMD.

The wearable device 101 according to an embodiment may execute a function related to augmented reality (AR) and/or mixed reality (MR). For example, in a state in which the user 110 wears the wearable device 101, the wearable device 101 may include at least one lens disposed adjacent to an eye of the user 110. The wearable device 101 may combine light emitted from a display of the wearable device 101 with ambient light passing through the lens. A displaying area of the display may be formed in the lens through which the ambient light passes. Since the wearable device 101 combines the light emitted from the display and the ambient light, the user 110 may view an image in which a real object recognized by the ambient light and a virtual object formed by the light emitted from the display are mixed. The above-described augmented reality, mixed reality, and/or virtual reality may be referred to as extended reality (XR).

The wearable device 101 according to an embodiment may execute a function related to video see-through (or visible see-through) (VST) and/or virtual reality (VR). For example, in a state in which the user 110 wears the wearable device 101, the wearable device 101 may include a housing covering an eye of the user 110. In the state, the wearable device 101 may include a display disposed on a first surface of the housing facing the eye. The wearable device 101 may include a camera disposed on a second surface opposite to the first surface. By using the camera, the wearable device 101 may obtain an image and/or a video representing ambient light. The wearable device 101 may output the image and/or the video in the display disposed on the first surface to allow the user 110 to recognize the ambient light through the display. A displaying area (or a displaying region) (or an active area or an active region) of the display disposed on the first surface may be formed by one or more pixels included in the display. The wearable device 101 may synthesize a virtual object with the image and/or the video output through the display to allow the user 110 to recognize the virtual object together with a real object recognized by the ambient light.

The wearable device 101 according to an embodiment may identify or recognize a position (or a location) and/or a direction (or an orientation) of the wearable device 101 based on the image (and/or the video) obtained (or acquired) by using the camera. The wearable device 101 may obtain information on the external space by using one or more cameras and/or one or more sensors. The information may include a geographic location (e.g., global positioning system (GPS) coordinates) of the external space identified from the one or more sensors. The information may include an image and/or a video for the external space identified from the one or more cameras. The wearable device 101 may identify external objects included in the external space from the image and/or the video by performing object recognition on the image and/or the video.

Hereinafter, an example of a hardware configuration of the wearable device 101 will be described with reference to FIG. 2A, FIG. 2B, FIG. 3A, FIG. 3B, and FIG. 4.

FIG. 2A illustrates an example of a perspective view of a wearable device. FIG. 2B illustrates an example of one or more hardware disposed in a wearable device. According to an embodiment, a wearable device 101 may have a form of glasses that is wearable on a body part (e.g., head) of a user. The wearable device 101 of FIGS. 2A to 2B may be an example of the wearable device 101 of FIG. 1. The wearable device 101 may include a head-mounted display (HMD). For example, a housing of the wearable device 101 may include a flexible material such as rubber and/or silicone having a form closely attached to a portion of the user's head (for example, a portion of a face surrounding two eyes). For example, the housing of the wearable device 101 may include one or more straps able to be twined around the user's head, and/or one or more temples attachable to ears of the head.

Referring to FIG. 2A, according to an embodiment, the wearable device 101 may include at least one display 250 and a frame 200 supporting the at least one display 250.

According to an embodiment, the wearable device 101 may be wearable on a portion of the user's body. The wearable device 101 may provide augmented reality (AR), virtual reality (VR), or mixed reality (MR) combining the augmented reality and the virtual reality to a user wearing the wearable device 101. For example, the wearable device 101 may display a virtual reality image provided from at least one optical device 282 and 284 of FIG. 2B on at least one display 250, in response to a user's preset gesture obtained through a motion recognition camera 260-2 and 260-3 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may provide visual information transmitted through a lens included in the at least one display 250 from ambient light to a user and other visual information distinguished from the visual information. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 101, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through ambient light, on a display area formed on the second surface 232.

According to an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 101 to guide a screen displayed by the at least one display 250 to the user's eyes. For example, the screen may be transmitted to the user's eyes based on total internal reflection (TIR) generated in the at least one waveguide 233 and 234.

The wearable device 101 may analyze an object included in a real image collected through a photographing camera 260-4, combine with a virtual object corresponding to an object that becomes a subject of augmented reality provision among the analyzed object, and display on the at least one display 250. The virtual object may include at least one of text and images for various information associated with the object included in the real image. The wearable device 101 may analyze the object based on a multi-camera such as a stereo camera. For the object analysis, the wearable device 101 may execute space recognition (e.g., simultaneous localization and mapping (SLAM)) using the multi-camera and/or time-of-flight (ToF)[ 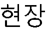 1.1]. The user wearing the wearable device 101 may watch an image displayed on the at least one display 250.

According to an embodiment, a frame 200 may be configured with a physical structure in which the wearable device 101 may be worn on the user's body. According to an embodiment, the frame 200 may be configured so that when the user wears the wearable device 101, the first display 250-1 and the second display 250-2 may be positioned corresponding to the user's left and right eyes. The frame 200 may support the at least one display 250. For example, the frame 200 may support the first display 250-1 and the second display 250-2 to be positioned at positions corresponding to the user's left and right eyes.

Referring to FIG. 2A, according to an embodiment, the frame 200 may include an area 220 at least partially in contact with the portion of the user's body in case that the user wears the wearable device 101. For example, the area 220 of the frame 200 in contact with the portion of the user's body may include an area in contact with a portion of the user's nose, a portion of the user's ear, and a portion of the side of the user's face that the wearable device 101 contacts. According to an embodiment, the frame 200 may include a nose pad 210 that is contacted on the portion of the user's body. When the wearable device 101 is worn by the user, the nose pad 210 may be contacted on the portion of the user's nose. The frame 200 may include a first temple 204 and a second temple 205, which are contacted on another portion of the user's body that is distinct from the portion of the user's body.

For example, the frame 200 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 101 may identify an external object (e.g., a user's fingertip) touching the frame 200 and/or a gesture performed by the external object by using a touch sensor, a grip sensor, and/or a proximity sensor formed on at least a portion of the surface of the frame 200.

According to an embodiment, the wearable device 101 may include hardware (e.g., hardware to be described later based on the block diagram of FIG. 4) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 200.

According to an embodiment, the microphone (e.g., the microphones 265-1, 265-2, and 265-3) of the wearable device 101 may obtain a sound signal, by being disposed on at least a portion of the frame 200. The first microphone 265-1 disposed on the bridge 203, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 101 is two or more, the wearable device 101 may identify a direction of the sound signal by using a plurality of microphones disposed on different portions of the frame 200.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 101 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 260-4, an eye tracking camera (ET CAM) 260-1, and/or the motion recognition camera 260-2 and 206-3. The photographing camera 260-4, the eye tracking camera 260-1, and the motion recognition camera 260-2 and 260-3 may be disposed at different positions on the frame 200 and may perform different functions. The eye tracking camera 260-1 may output data indicating a position of eye or a gaze of the user wearing the wearable device 101. For example, the wearable device 101 may detect the gaze from an image including the user's pupil obtained through the eye tracking camera 260-1. The wearable device 101 may identify an object (e.g., a real object, and/or a virtual object) focused by the user, by using the user's gaze obtained through the eye tracking camera 260-1. The wearable device 101 identifying the focused object may execute a function (e.g., gaze interaction) for interaction between the user and the focused object. The wearable device 101 may represent a portion corresponding to eye of an avatar indicating the user in the virtual space, by using the user's gaze obtained through the eye tracking camera 260-1. The wearable device 101 may render an image (or a screen) displayed on the at least one display 250, based on the position of the user's eye. For example, visual quality (e.g., resolution, brightness, saturation, grayscale, and PPI) of a first area related to the gaze within the image and visual quality of a second area distinguished from the first area may be different. The wearable device 101 may obtain an image having the visual quality of the first area matching the user's gaze and the visual quality of the second area by using foveated rendering. For example, when the wearable device 101 supports an iris recognition function, user authentication may be performed based on iris information obtained using the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 260-4 may photograph a real image or background to be matched with a virtual image in order to implement the augmented reality or mixed reality content. The photographing camera 260-4 may be used to obtain an image having a high resolution based on a high resolution (HR) or a photo video (PV). The photographing camera 260-4 may photograph an image of a specific object existing at a position viewed by the user and may provide the image to the at least one display 250. The at least one display 250 may display one image in which a virtual image provided through the at least one optical device 282 and 284 is overlapped with information on the real image or background including an image of the specific object obtained by using the photographing camera 260-4. The wearable device 101 may compensate for depth information (e.g., a distance between the wearable device 101 and an external object obtained through a depth sensor), by using an image obtained through the photographing camera 260-4. The wearable device 101 may perform object recognition through an image obtained using the photographing camera 260-4. The wearable device 101 may perform a function (e.g., auto focus (AF)) of focusing an object (or subject) within an image and/or an optical image stabilization (OIS) function (e.g., an anti-shaking function) by using the photographing camera 260-4. While displaying a screen representing a virtual space on the at least one display 250, the wearable device 101 may perform a pass through function for displaying an image obtained through the photographing camera 260-4 overlapping at least a portion of the screen. In an embodiment, the photographing camera 260-4 may be disposed on the bridge 203 disposed between the first rim 201 and the second rim 202.

The eye tracking camera 260-1 may implement a more realistic augmented reality by matching the user's gaze with the visual information provided on the at least one display 250, by tracking the gaze of the user wearing the wearable device 101. For example, when the user looks at the front, the wearable device 101 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 101 is positioned.

The motion recognition camera 260-2 and 260-3 may provide a specific event to the screen provided on the at least one display 250 by recognizing the movement of the whole or portion of the user's body, such as the user's torso, hand, or face. The motion recognition camera 260-2 and 260-3 may obtain a signal corresponding to motion by recognizing the user's motion (e.g., gesture recognition), and may provide a display corresponding to the signal to the at least one display 250. The processor may identify a signal corresponding to the operation and may perform a preset function based on the identification. The motion recognition camera 260-2 and 260-3 may be used to perform SLAM for 6 degrees of freedom pose (6 dof pose) and/or a space recognition function using a depth map. The processor may perform a gesture recognition function and/or an object tracking function, by using the motion recognition camera 260-2 and 260-3. In an embodiment, the motion recognition camera 260-2 and camera 260-3 may be disposed on the first rim 201 and/or the second rim 202.

The camera 260 included in the wearable device 101 are not limited to the above-described eye tracking camera 260-1 and the motion recognition camera 260-2 and 260-3. For example, the wearable device 101 may identify an external object included in a field of view (FoV) by using a camera disposed toward the user's FoV. The wearable device 101 identifying the external object may be performed based on a sensor for identifying a distance between the wearable device 101 and the external object, such as a depth sensor and/or a time of flight (ToF) sensor. The camera 260 disposed toward the FoV may support an autofocus (AF) function and/or an optical image stabilization (OIS) function. For example, in order to obtain an image including a face of the user wearing the wearable device 101, the wearable device 101 may include the camera 260 (e.g., a face tracking (FT) camera) disposed toward the face.

Although not illustrated, the wearable device 101 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 200, and the hinge units 206 and 207.

According to an embodiment, the battery module 270 may supply power to electronic components of the wearable device 101. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

The antenna module 275 may transmit the signal or power to the outside of the wearable device 101 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

The speaker 255 may output a sound signal to the outside of the wearable device 101. A sound output module may be referred to as a speaker. In an embodiment, the speaker 255 may be disposed in the first temple 204 and/or the second temple 205 in order to be disposed adjacent to the ear of the user wearing the wearable device 101. For example, the speaker 255 may include a second speaker 255-2 disposed adjacent to the user's left ear by being disposed in the first temple 204, and a first speaker 255-1 disposed adjacent to the user's right ear by being disposed in the second temple 205.

The light emitting module (not illustrated) may include at least one light emitting element. The light emitting module may emit light of a color corresponding to a specific state or may emit light through an operation corresponding to the specific state in order to visually provide information on a specific state of the wearable device 101 to the user. For example, when the wearable device 101 requires charging, it may emit red light at a constant cycle. In an embodiment, the light emitting module may be disposed on the first rim 201 and/or the second rim 202.

Referring to FIG. 2B, according to an embodiment, the wearable device 101 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by different blocks of FIG. 4) included in the wearable device 101 may be disposed. The wearable device 101 may include a flexible PCB (FPCB) for interconnecting the hardware.

According to an embodiment, the wearable device 101 may include at least one of a gyro sensor, a gravity sensor, and/or an acceleration sensor for detecting the posture of the wearable device 101 and/or the posture of a body part (e.g., a head) of the user wearing the wearable device 101. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 101 may identify the user's motion and/or gesture performed to execute or stop a specific function of the wearable device 101 based on the IMU.

FIGS. 3A to 3B illustrate an example of an exterior of a wearable device (e.g., the wearable device 101). The wearable device 101 of FIGS. 3A to 3B may be an example of the wearable device 101 of FIG. 1. According to an embodiment, an example of an exterior of a first surface 310 of a housing of the wearable device 101 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 101 may have an attachable shape on the user's body part (e.g., the user's face). Although not illustrated, the wearable device 101 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 101 may further include rubber or silicon packing, which are formed on the first surface 310, for preventing interference by light (e.g., ambient light) different from the light emitted from the first display 250-1 and the second display 250-2.

According to an embodiment, the wearable device 101 may include a camera 260-1 for photographing and/or tracking two eyes of the user adjacent to each of the first display 250-1 and the second display 250-2. The camera 260-1 may be referred to as the gaze tracking camera 260-1 of FIG. 2B. According to an embodiment, the wearable device 101 may include cameras 260-5 and 260-6 for photographing and/or recognizing the user's face. The cameras 260-5 and 260-6 may be referred to as a FT camera. The wearable device 101 may control an avatar representing a user in a virtual space, based on a motion of the user's face identified using the cameras 260-5 and 260-6. For example, the wearable device 101 may change a texture and/or a shape of a portion (e.g., a portion of an avatar representing a human face) of the avatar, by using information obtained by the cameras 260-5 and 260-6 (e.g., the FT camera) and representing the facial expression of the user wearing the wearable device 101.

Referring to FIG. 3B, a camera (e.g., cameras 260-7, 260-8, 260-9, 260-10, 260-11, and 260-12), and/or a sensor (e.g., the depth sensor 330) for obtaining information associated with the external environment of the wearable device 101 may be disposed on the second surface 320 opposite to the first surface 310 of FIG. 3A. For example, the cameras 260-7, 260-8, 260-9, and 260-10 may be disposed on the second surface 320 in order to recognize an external object. The cameras 260-7, 260-8, 260-9, and 260-10 may be referred to as the motion recognition cameras 260-2 and 260-3 of FIG. 2B.

For example, by using cameras 260-11 and 260-12, the wearable device 101 may obtain an image and/or video to be transmitted to each of the user's two eyes. The camera 260-11 may be disposed on the second surface 320 of the wearable device 101 to obtain an image to be displayed through the second display 250-2 corresponding to the right eye among the two eyes. The camera 260-12 may be disposed on the second surface 320 of the wearable device 101 to obtain an image to be displayed through the first display 250-1 corresponding to the left eye among the two eyes. The cameras 260-11 and 260-12 may be referred to as the photographing camera 260-4 of FIG. 2B.

According to an embodiment, the wearable device 101 may include the depth sensor 330 disposed on the second surface 320 in order to identify a distance between the wearable device 101 and the external object. By using the depth sensor 330, the wearable device 101 may obtain spatial information (e.g., a depth map) about at least a portion of the FoV of the user wearing the wearable device 101. Although not illustrated, a microphone for obtaining sound outputted from the external object may be disposed on the second surface 320 of the wearable device 101. The number of microphones may be one or more according to embodiments.

Hereinafter, a hardware or software configuration of the wearable device 101 will be described later with reference to FIG. 4.

FIG. 4 illustrates an example of a block diagram of a wearable device (e.g., the wearable device 101). The wearable device 101 of FIG. 4 may be an example of the electronic device 101 of FIG. 1 and the wearable device 101 of FIGS. 2A to 3B.

Referring to FIG. 4, the wearable device 101 according to an embodiment may include a processor 410, memory 415, a display 250 (e.g., the first display 250-1 and/or the second display 250-2 of FIGS. 2A, 2B, 3A, and 3B) and/or a sensor 420 (e.g., an image sensor 421 and/or a motion sensor 422). The processor 410, the memory 415, the display 250, and/or the sensor 420 may be electrically and/or operably connected to each other by an electronic component such as a communication bus 402. In the present disclosure, an operational connection of electronic components may include a direct connection established between the electronic components and/or an indirect connection established between the electronic components such that a first electronic component of the electronic components is controlled by a second electronic component of the electronic components. The type and/or number of electronic components included in the wearable device 101 is not limited as illustrated in FIG. 4. For example, the wearable device 101 may include only some of the electronic components illustrated in FIG. 4.

According to an embodiment, the processor 410 of the wearable device 101 may include circuitry (e.g., processing circuitry) for processing data based on one or more instructions. For example, the circuitry for processing data may include an arithmetic and logic unit (ALU), a field programmable gate array (FPGA), a central processing unit (CPU) and/or an application processor (AP). In an embodiment, the wearable device 101 may include one or more processors. The processor 410 may have a structure of a multi-core processor such as a dual core, a quad core, a hexa core, and/or an octa core. The multi-core processor structure of the processor 410 may include a structure (e.g., a big-little structure) based on a plurality of core circuits, which are separated by power consumption, clock, and/or computational amount per unit time. In an embodiment including the processor 410 with a multi-core processor structure, operations and/or functions of the present disclosure may be performed individually or collectively by one or more cores included in the processor 410.

According to an embodiment, the memory 415 of the wearable device 101 may include an electronic component for storing data and/or instructions inputted to the processor 410 and/or outputted from the processor 410. For example, the memory 415 may include a volatile memory such as a random-access memory (RAM) and/or a non-volatile memory such as a read-only memory (ROM). For example, the volatile memory may include at least one of a dynamic RAM (DRAM), a static RAM (SRAM), a cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disc, and an embedded multi-media card (eMMC). In an embodiment, the memory 415 may be referred to as a storage.

In an embodiment, the display 250 of the wearable device 101 may output visualized information to a user of the wearable device 101. The display 250 arranged in front of eyes of the user wearing the wearable device 101 may be disposed in at least a portion of a housing of the wearable device 101 (e.g., the first display 250-1 and/or the second display 250-2 of FIGS. 2A, 2B, 3A, and 3B). For example, the display 250 may output visualized information to the user by being controlled by the processor 410 including a circuit such as a CPU 411, a graphic processing unit (GPU) 412, and/or a display processing unit (DPU) 413. The display 250 may include a flexible display, a flat panel display (FPD) and/or electronic paper. The display 250 may include a liquid crystal display (LCD), a plasma display panel (PDP), and/or one or more light emitting diode (LED). The LED may include an organic LED (OLED). The embodiment is not limited thereto, and for example, when the wearable device 101 includes a lens for transmitting external light (or ambient light), the display 250 may include a projector (or projection assembly) for projecting light onto the lens. In an embodiment, the display 250 may be referred to as a display panel and/or a display module. Pixels included in the display 250 may be disposed toward any one of the user's two eyes when worn by the user of the wearable device 101. For example, the display 250 may include display areas (or active areas) corresponding to each of the user's two eyes.

In an embodiment, the sensor 420 of the wearable device 101 may generate electronic information capable of being processed by the processor 410 and/or the memory 415 from non-electronic information associated with the wearable device 101. For example, the sensor 420 may include a global positioning system (GPS) sensor for detecting a geographic location of the wearable device 101. In addition to the GPS scheme, the sensor 420 may generate information indicating a geographical location of the wearable device 101 based on a global navigation satellite system (GNSS), such as Galileo, and Beidou (Compass). The information may be stored in the memory 415, processed by the processor 410, and/or transmitted to another electronic device distinct from the wearable device 101 via a communication circuit.

Referring to FIG. 4, as an example of the sensor 420 included in the wearable device 101, an image sensor 421 and/or a motion sensor 422 are illustrated. The sensor 420 may include one or more optical sensors (e.g., a charged coupled device (CCD) sensor, a complementary metal oxide semiconductor (CMOS) sensor) generating an electrical signal indicating a color and/or a brightness of light. The image sensor 421 may be referred to as a camera. A plurality of optical sensors included in the image sensor 421 may be arranged in a form of a 2-dimensional array. The image sensor 421 may obtain electrical signals of each of the plurality of optical sensors substantially simultaneously to generate 2-dimensional frame data corresponding to light reaching optical sensors of the 2-dimensional array. For example, photo data captured using the image sensor 421 may indicate a 2-dimensional frame data obtained from the image sensor 421. For example, video data captured using the image sensor 421 may indicate a sequence of a plurality of 2-dimensional frame data obtained from the image sensor 421 according to a frame rate. The image sensor 421 may further include a flash light, positioned toward a direction in which the image sensor 421 receives light, for outputting light toward the direction.

According to an embodiment, the wearable device 101 may include a plurality of image sensors disposed toward different directions as an example of the image sensor 421. As described above with reference to FIG. 2A, FIG. 2B, FIG. 3A, and FIG. 3B, the plurality of image sensors may include an eye tracking camera (e.g., the eye tracking camera 260-1 of FIG. 2B and FIG. 3A) configured to be arranged toward eyes of a user wearing the wearable device 101. The plurality of image sensors may include an outward camera. The processor 410 may identify a direction of a gaze of the user by using an image and/or a video obtained from the eye tracking camera. The eye tracking camera may include an infrared (IR) sensor. The eye tracking camera may be referred to as an eye sensor and/or an eye tracker.

For example, the outward camera may be disposed toward a front direction (e.g., a direction toward which two eyes may face) of a user wearing the wearable device 101. The wearable device 101 may include a plurality of outward cameras. The embodiment is not limited thereto, and the outward camera may be disposed toward an external space. Using an image and/or a video obtained from the outward camera, the processor 410 may identify an external object. For example, the processor 410 may identify a position, a shape, and/or a gesture (e.g., a hand gesture) of a hand of a user wearing the wearable device 101 based on an image and/or a video obtained from the outward camera. Using an image and/or a video of the external environment obtained from the outward camera, the processor 410 may recognize and/or track one or more objects in the external environment.

According to an embodiment, the motion sensor 422 may output an electrical signal indicating gravitational accelerations, accelerations, and/or angular velocities of a plurality of axes (e.g., an x-axis, a y-axis, and a z-axis), which are perpendicular to each other and based on a designated origin within the wearable device 101 and/or the motion sensor 422. For example, the processor 410 may repeatedly receive or obtain sensor data including accelerations, angular velocities, and/or magnitudes of magnetic field of the number of the plurality of axes from the motion sensor 422, based on a designated period (e.g., 1 millisecond). In an embodiment, the motion sensor 422 may be referred to as an inertial measurement unit (IMU). The sensor 420 included in the wearable device 101 is not limited to the above description and may include a grip sensor, a proximity sensor, a heart rate sensor, a fingerprint sensor, an illuminance sensor, and/or a ToF sensor. Using the motion sensor 422, the processor 410 may detect a motion of the wearable device 101 (e.g., a motion of the wearable device 101 caused by a user wearing the wearable device 101).

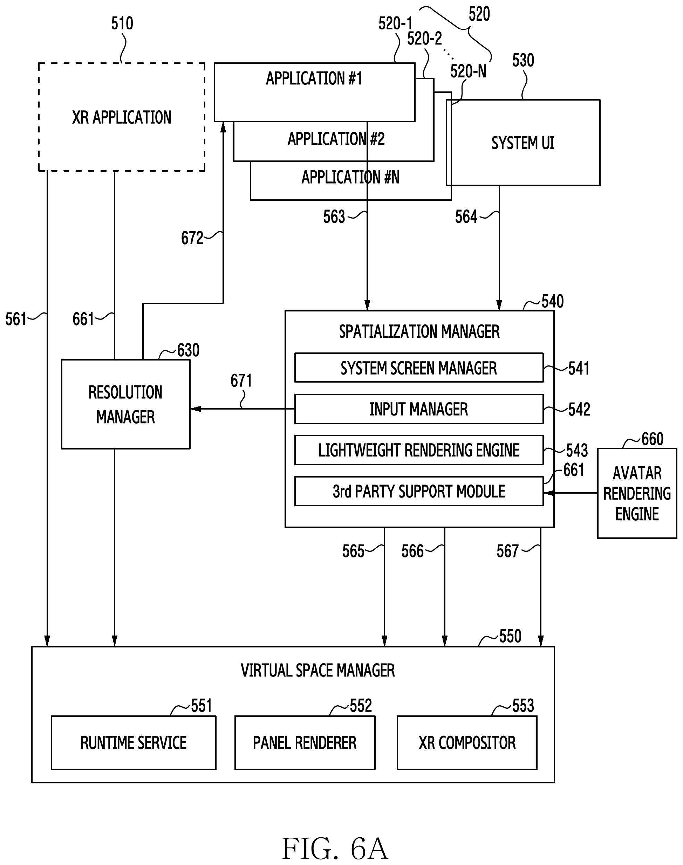

According to an embodiment, one or more instructions (or commands) indicating data to be processed by the processor 410 of the wearable device 101, calculations and/or operations to be performed by the processor 410 of the wearable device 101 may be stored in the memory 415 of the wearable device 101. A set of one or more instructions may be referred to as a program, a firmware, an operating system, a process, a routine, a sub-routine, and/or a software application (hereinafter referred to as application). For example, the wearable device 101 and/or the processor 410 may perform at least one of operations of FIGS. 6A, 6B, 7, 8, 9 and 10, when a set of a plurality of instruction distributed in a form of operating system, firmware, driver, program, and/or software application is executed. Hereinafter, a software application being installed within the wearable device 101 may mean that one or more instructions provided in a form of software application (or package) are stored in the memory 415, and that the one or more applications are stored in an executable format (e.g., a file with an extension designated by the operating system of the wearable device 101) by the processor 410. As an example, the application may include a program and/or a library, associated with a service provided to the user.

Referring to FIG. 4, programs installed in the wearable device 101 may be included in any one of different layers including an application layer 440, a framework layer 450, and/or a hardware abstraction layer (HAL) 480, based on a target. For example, programs (e.g., module or driver) designed to target a hardware (e.g., the display 250, and/or the sensor 420) of the wearable device 101 may be included in the hardware abstraction layer 480. In terms of including one or more programs for providing an extended reality (XR) service, the framework layer 450 may be referred to as an XR framework layer. For example, the layers illustrated in FIG. 4, which are logically separated (or separated for convenience of explanation), may not mean that an address space of the memory 415 is separated by the layers.

For example, programs (e.g., a location tracker 471, a space recognizer 472, a gesture tracker 473, and a gaze tracker 474) designed to target at least one of the hardware abstraction layer 480 and/or the application layer 440 may be included in the framework layer 450. The programs included in the framework layer 450 may provide an application programming interface (API) capable of being executed (or invoked (or called)) based on another program.

For example, a program designed to target a user of the wearable device 101 may be included in the application layer 440. An extended reality (XR) system user interface (UI) 441 and/or an XR application 442 are illustrated as an example of programs included in the application layer 440, but the embodiment is not limited thereto. For example, the programs (e.g., software application) included in the application layer 440 may cause execution of a function supported by programs included in the framework layer 450, by calling the API.

For example, the wearable device 101 may display, on the display 250, one or more visual objects for performing interaction with a user, based on execution of the XR system UI 441. The visual object may mean an object capable of being positioned within a screen for transmission of information and/or interaction, such as a text, an image, an icon, a video, a button, a check box, a radio button, a text box, a slider and/or a table. The visual object may be referred to as a visual guide, a virtual object, a visual element, a UI element, a view object, and/or a view element. The wearable device 101 may provide, to a user, functions available in a virtual space based on the execution of the XR system UI 441.

Referring to FIG. 4, it is illustrated that the XR system UI 441 includes a lightweight renderer 443 and/or an XR plug-in 444, but is not limited thereto. For example, the processor 410 may execute a lightweight renderer 443 and/or an XR plug-in 444 in the framework layer 450, based on the XR system UI 441.

For example, the wearable device 101 may obtain a resource (e.g., API, system process, and/or library) used to define, generate, and/or execute a rendering pipeline in which a partial change is allowed, based on the execution of the lightweight renderer 443. The lightweight renderer 443 may be referred to as a lightweight renderer pipeline, in terms of defining a rendering pipeline in which a partial change is allowed. The lightweight renderer 443 may include a renderer (e.g., a prebuilt renderer) built before execution of a software application. For example, the wearable device 101 may obtain a resource (e.g., API, system process, and/or library) used to define, generate, and/or execute the entire rendering pipeline, based on the execution of the XR plug-in 444. The XR plug-in 444 may be referred to as an open XR native client, in terms of defining (or setting) the entire rendering pipeline.

For example, the wearable device 101 may display, on the display 250, a screen representing at least a portion of a virtual space, based on the execution of the XR application 442. The XR plug-in 444-1 included in the XR application 442 may include instructions supporting a function similar to the XR plug-in 444 of the XR system UI 441. Among descriptions of the XR plug-in 444-1, a description overlapping those of the XR plug-in 444 may be omitted. The wearable device 101 may cause execution of a virtual space manager 451, based on execution of the XR application 442.

For example, the wearable device 101 may display, on the display 250, an image in a virtual space, based on execution of an application 445. The application 445 may be configured to output image information for displaying a two-dimensional image. The wearable device 101 may cause execution of the virtual space manager 451, based on the execution of the application 445. The wearable device 101 may generate double image information to represent the two-dimensional image in a three-dimensional virtual space, based on the execution of the application 445. Herein, the double image information may include first image information for a left eye and second image information for a right eye, in consideration of binocular disparity. In order to represent the two-dimensional image in the three-dimensional virtual space, the wearable device 101 may generate the double image information, based on image information for displaying the two-dimensional image.

According to an embodiment, the wearable device 101 may provide a virtual space service, based on the execution of the virtual space manager 451. For example, the virtual space manager 451 may include a platform for supporting the virtual space service. Based on the execution of the virtual space manager 451, the wearable device 101 may identify a virtual space formed based on a user's location indicated by data obtained through the sensor 430, and may display at least a portion of the virtual space on the display 250. The virtual space manager 451 may be referred to as a composition presentation manager (CPM).

For example, the virtual space manager 451 may include a runtime service 452. As an example, the runtime service 452 may be referred to as an OpenXR runtime module (or OpenXR runtime program). The wearable device 101 may execute at least one of a user's pose prediction function, a frame timing function, and/or a space input function, based on the execution of the runtime service 452. As an example, the wearable device 101 may perform rendering for a virtual space service to a user, based on the execution of the runtime service 452. For example, a function associated with a virtual space executable by the application layer 440 may be supported based on the execution of runtime service 452.

For example, the virtual space manager 451 may include a pass-through manager 453. Based on the execution of the pass-through manager 453, the wearable device 101 may overlappingly display, while displaying a screen (e.g. the screen 120 of FIG. 1) representing a virtual space on display 250, an image and/or a video representing an actual space obtained through an external camera on at least a portion of the screen.

For example, the virtual space manager 451 may include an input manager 454. The wearable device 101 may identify data (e.g., sensor data) obtained by executing one or more programs included in a perception service layer 470, based on the execution of the input manager 454. The wearable device 101 may identify a user input associated with the wearable device 101, by using the obtained data. The user input may be associated with the user's motion (e.g., hand gesture), gaze, and/or speech identified by the sensor 420 (e.g., an image sensor 430 such as an external camera). The user input may be identified based on an external electronic device connected (or paired) through a communication circuit.

For example, a perception abstract layer 460 may be used for data exchange between the virtual space manager 451 and the perception service layer 470. In terms of being used for data exchange between the virtual space manager 451 and the perception service layer 470, the perception abstract layer 460 may be referred to as an interface. As an example, the perception abstraction layer 460 may be referred to as OpenPX. The perception abstraction layer 460 may be used for a perception client and a perception service.

According to an embodiment, the perception service layer 470 may include one or more programs for processing data obtained from the sensor 420. One or more programs may include at least one of the location tracker 471, the space recognizer 472, the gesture tracker 473, and/or the gaze tracker 474. The type and/or number of one or more programs included in the perception service layer 470 is not limited as illustrated in FIG. 4.

For example, the wearable device 101 may identify a posture of the wearable device 101 by using the sensor 430, based on the execution of the location tracker 471. The wearable device 101 may identify 6 degrees of freedom pose (6 dof pose) of the wearable device 101 by using data obtained using an external camera (e.g., the image sensor 421) and/or an IMU (e.g., the motion sensor 422 including gyro sensor, acceleration sensor and/or geomagnetic sensor), based on the execution of the location tracker 471. The location tracker 471 may be referred to as a head tracking (HeT) module (or a head tracker or head tracking program).

For example, the wearable device 101 may obtain information for providing a three-dimensional virtual space corresponding to a surrounding environment (e.g., external space) of the wearable device 101 (or a user of the wearable device 101), based on the execution of the space recognizer 472. The wearable device 101 may reproduce the surrounding environment of the wearable device 101 in three dimensions, by using data obtained using an external camera (e.g., the image sensor 421), based on the execution of the space recognizer 472. The wearable device 101 may identify at least one of a plane, an inclination, and a step, based on the surrounding environment of the wearable device 101 reproduced in three dimensions based on the execution of the space recognizer 472. The space recognizer 472 may be referred to as a scene understanding (SU) module (or a scene recognition program).

For example, the wearable device 101 may identify (or recognize) a hand's pose and/or gesture of the user of the wearable device 101 based on the execution of the gesture tracker 473. For example, the wearable device 101 may identify a pose and/or a gesture of the user's hand by using data obtained from an external camera (e.g., the image sensor 421), based on the execution of the gesture tracker 473. As an example, the wearable device 101 may identify a pose and/or a gesture of the user's hand, based on data (or image) obtained using an external camera based on the execution of the gesture tracker 473. The gesture tracker 473 may be referred to as a hand tracking (HaT) module (or a hand tracking program) and/or a gesture tracking module.

For example, the wearable device 101 may identify (or track) eye movement of the user of the wearable device 101, based on the execution of the gaze tracker 474. For example, the wearable device 101 may identify the eye movement of the user, by using data obtained from a gaze tracking camera (e.g., the image sensor 421) based on the execution of the gaze tracker 474. The gaze tracker 474 may be referred to as an eye tracking (ET) module (or eye tracking program) and/or a gaze tracking module.

Referring to FIG. 4, the CPU 411, the graphic processing unit (GPU) 412, and/or the display processing unit (DPU) 413 are illustrated as an example of the processor 410. The renderer 490 may include instructions for rendering images in a three-dimensional virtual space. The processor 410 (e.g., the DPU 413) executing the renderer 490 may obtain at least one image to be at least partially displayed on a display area of the display 250 at a software application (e.g., a software applications executed by the CPU 411 and/or the GPU 412). For example, the processor 410 executing the renderer 490 may determine a location of an area to which an application (e.g., the XR application 242, the application 245) is to be rendered. The processor 410 executing the renderer 490 may generate an image of the application to be displayed on the display 250. The renderer 490 may generate a composite image to be displayed on the display 250, by synthesizing images.

For example, the processor 410 executing the renderer 490 may divide a display area of the display 250 into a foveated portion (or may be referred to as a foveated area) and a peripheral portion (or may be referred to as a remaining area), by using a gaze location calculated using the location tracker 471 and/or the gaze tracker 474. For example, the processor 410 detecting coordinate values of the gaze location may determine a portion of a display area including the coordinate values as a foveated area. The DPU 413 executing the renderer 490 may obtain at least one image, corresponding to each of the foveated area and the remaining area, and having a size smaller than a size of the entire display area of the display 250 or having a resolution less than a resolution of the display area.

The processor 410 executing the renderer 490 may obtain or generate a composite image to be displayed on the display 250, by synthesizing an image corresponding to the foveated area and an image corresponding to a peripheral portion. For example, the processor 410 may enlarge the image corresponding to the peripheral portion to a size of the entire display area of the display 250, by performing upscaling. The processor 410 may generate a composite image to be displayed on the display 250, by combine the image corresponding to the foveated area onto the enlarged image. The processor 410 may mix the enlarged image and the image corresponding to the foveated area, by applying a visual effect, such as blur, along a boundary line of the image corresponding to the foveated area.

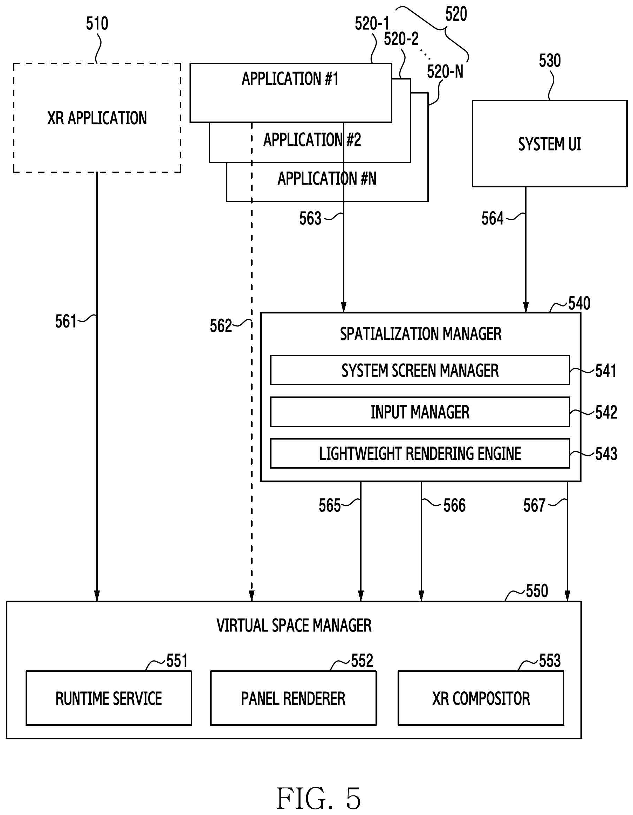

FIG. 5 illustrates an example of a block diagram of an electronic device (e.g., the electronic device 101, the wearable device 101) for displaying an image in a virtual space. In FIG. 5, an example in which a plurality of programs/instructions for displaying an image in a virtual space is executed is described. The plurality of programs/instructions may all be executed in a single processor (e.g., AP) or may be executed by a plurality of processors (e.g., AP, graphic processing unit (GPU), neural processing unit (NPU)). The meaning of being executable by the plurality of processors may indicate that a portion of programs/instructions may be executed by a first processor and another portion of programs/instructions may be executed by a second processor different from the first processor.

Referring to FIG. 5, the electronic device 101 may execute a virtual space manager 550 (e.g., the virtual space manager 451 (CPM) of FIG. 4) to render an image in a virtual space. For the virtual space manager 550, descriptions of the virtual space manager 451 of FIG. 4 may be at least partially referenced. The virtual space manager 550 may include a platform for supporting a virtual space service. The virtual space manager 550 may include a runtime service 551 (e.g., OpenXR Runtime), a panel renderer 552 (e.g., 2D Panel Render), and an XR compositor 553. The electronic device 101 may execute at least one of a user's pose prediction function, a frame timing function, and/or a space input function, based on the execution of the runtime service 551. For the runtime service 551, descriptions of the runtime service 452 of FIG. 4 may be at least partially referenced. The electronic device 101 may display at least one image (video) on a panel (e.g., 2D panel) to implement a virtual space through a display, based on the execution of the panel rendering 552. For example, the electronic device 101 may display, via a display (e.g., the display 250), a rendering image corresponding to RGB information 566 for a panel from a spatialization manager 540 to be described later. The electronic device 101 may synthesize an image of an actual area captured through a camera in a virtual space (hereinafter, a pass-through image) and a virtual area image, based on the execution of the XR compositor 553. For example, the electronic device 101 may generate a composite image, by merging the pass-through image and the virtual area image, based on the execution of the XR compositor 553. The electronic device 101 may transmit the generated composite image to a display buffer so that the composite image is displayed. The electronic device 101 may identify a virtual space through the virtual space manager 550, and display at least a portion of the virtual space on the display 250. The virtual space manager 550 may be referred to as a CPM. The electronic device 101 may execute the virtual space manager 550 to render an image corresponding to at least a portion of the virtual space.

According to an embodiment, the electronic device 101 may execute the spatialization manager 540. The spatialization manager 540 may perform processes for displaying an image in a three-dimensional virtual space. The electronic device 101 may perform preprocessing based on the execution of the spatialization manager 540 so that an image may be rendered in a three-dimensional virtual space through the virtual space manager 550. For example, the electronic device 101 may perform at least a portion of functions of the renderer 490 of FIG. 4, based on the execution of the spatialization manager 540. Based on the execution of the spatialization manager 540, the electronic device 101 may process image information provided by an application (e.g., an XR application 510, an application 520 providing a normal two-dimensional screen other than XR, and an application providing a system UI 530). The spatialization manager 540 (e.g., Space Flinger) may include a system screen manager 541 (e.g., System scene), an input manager 542 (e.g., Input Routing), and a lightweight rendering engine 543 (e.g., Impress Engine). The system screen manager 541 may be executed to display the system UI 530. System UI-related information 564 may be transmitted from a program (e.g., API) providing the system UI 530 to the system screen manager 541. The system UI-related information 564 may be obtained through a spatializer API and/or a Same-process private API. The spatialization manager 540 may determine a layout (e.g., location, display order) of a screen of the system UI 530 in a three-dimensional space, through pre-allocated resources. The system screen manager 541 may transmit image information 567 for rendering a screen of the system UI 530 to the virtual space manager 550, according to the layout. The input manager 542 may be configured to process a user input (e.g., user input on a system screen or an app screen). The lightweight renderer engine 543 may be a renderer (e.g., the lightweight renderer 443) for generating an image. For example, the lightweight renderer engine 543 may be used to display the system UI 530. According to an embodiment, the spatialization manager 540 may include the lightweight rendering engine 543 for rendering the system UI. According to an embodiment, in a case that the lightweight rendering engine 543 does not have enough resources to render an avatar used in HMD, at least one external rendering engine may be used. In this case, in order to solve the compatibility issue with external rendering (e.g., 3rd party engine), an external rendering engine support module may be added within the spatialization manager 540.

According to an embodiment, the electronic device may execute an application. For example, the virtual space manager 550 may be executed in response to the execution of the XR application 510 (e.g., the XR application 442, 3D game, XR map, and other immersive application). The electronic device 101 may provide, to the virtual space manager 550, double image information 561 provided from the XR application 510. In order to display an image in a three-dimensional space, the double image information 561 may include two image information considering binocular disparity. For example, the double image information 561 may include first image information for the user's left eye and second image information for the user's right eye, for rendering in a three-dimensional virtual space. Hereinafter, in the present disclosure, the double image information is used as a term referring to image information for indicating images for two eyes in a three-dimensional space. In addition to the double image information, binocular image information, double image information, double image data, double image, binocular image data, stereoscopic image information, 3D image information, spatial image information, spatial image data, 2D-3D conversion data, dimensional conversion image data, binocular disparity image data, and/or equivalent technical terms may be used. The electronic device 101 may generate a composite image by merging image layers via the virtual space manager 550. The electronic device 101 may transmit the generated composite image to a display buffer. The composite image may be displayed on the display 250 of the electronic device 101.

According to an embodiment, the electronic device may execute at least one of application 520 (e.g., a first application 520-1, a second application 520-2, ..., and a Nth application 520-N) different from the XR application 510. According to an embodiment, the application 520 may be configured to output image information for displaying a two-dimensional image. In other words, the application 520 may provide a two-dimensional image. As an example, the application 520 may be an image application, a schedule application, or an Internet browser application. Suppose that image information 562 provided from the application 210 is provided to the virtual space manager 550 in response to the execution of the application 520. Since the image information 562 has only the x-coordinate and y-coordinate in the two-dimensional plane, it may be difficult to consider a precedence relation between other applications with respect to the user (i.e., a distance spaced apart from the user). Even when displaying the application 520 providing a general 2D screen, the electronic device 101 may execute the spatialization manager 540 to provide double image information to the virtual space manager 550. For example, the electronic device 101 may receive application-related information 563 from the first application 520-1, based on the execution of the spatialization manager 540. For example, the application-related information 563 may include image information (e.g., information including RGB per pixel) indicating a two-dimensional image of the first application 520-1 and/or content information (e.g., characteristic of content executed in the first application, type of content) in the first application 520-1. The application-related information 563 may be obtained through a spatializer API. Based on the execution of the spatialization manager 540, the electronic device 101 may identify a location of an area in which the first application 520-1 is to be rendered and information on a size of the area to be rendered (hereinafter, location information). Based on the execution of the spatialization manager 540, the electronic device 101 may generate double image information 565 (e.g., RGBx2) in which the user's binocular disparity is considered, through the image information and the location information. Based on the execution of the spatialization manager 540, the electronic device 101 may provide the double image information 565 to the virtual space manager 550. By converting a simple two-dimensional image into the double image information 565, a problem occurring when the image information 562 is directly transmitted to the virtual space manager 550 may be solved. In addition, as at least a portion of functions for displaying an image in a virtual space is performed by the spatialization manager 540 instead of the virtual space manager 550, a burden of the virtual space manager 550 may be reduced. However, as image information from the application 520 may not be directly transferred to the virtual space manager 550 and be transferred through the spatialization manager 540, quality of an image finally output to a user may be lowered. As an example, an image may be rendered at a resolution of about 2756 x 1846 in the first application 520-1, but the image may be down-sampled in a process of being transferred to the virtual space manager 550 through the spatialization manager 540 (e.g., down-sampling from a resolution of about 2756 x 1846 to a resolution of about 1160 x 680). Thereafter, the virtual space manager 550 may up-sample the down-sampled image (e.g., up-sampling from a resolution of about 1160 x 680 to a resolution of about 1625 x 1070), and transfer the up-sampled image to a display buffer. As such, in a process in which the image is transferred from the application 520 to the spatialization manager 540 and transferred from the spatialization manager 540 to the virtual space manager 550, resolution mismatch may occur, or an aliasing problem or an image quality degradation problem in an up-sampling process may occur. In order to solve the above-described problems, in the present disclosure, based on the system structure illustrated in FIG. 5, techniques for controlling a resolution for an area to be displayed in an application and performing foveation rendering are described.

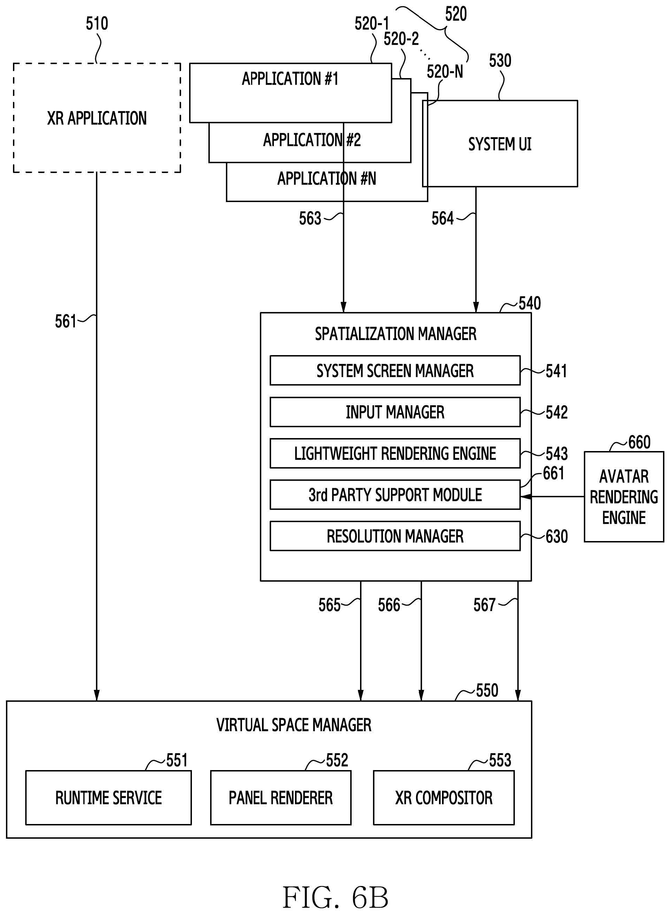

FIGS. 6A and 6B illustrate examples of block diagrams of an electronic device (e.g., an electronic device 101 or a wearable device 101) for controlling a resolution of an image in a virtual space. In FIGS. 6A and 6B, an example in which a plurality of programs/instructions for controlling the resolution of the image in the virtual space are executed is described. The plurality of programs/instructions may be all executed in one processor (e.g., an AP), or may be executed by a plurality of processors (e.g., an AP, a graphic processing unit (GPU), and a neural processing unit (NPU)). The meaning of being executed by the plurality of processors may indicate that a portion of the programs/instructions may be executed by a first processor and another portion of the programs/instructions may be executed by a second processor different from the first processor.

Referring to FIG. 6A, the electronic device 101 may execute a spatialization manager 540 and a virtual space manager 550 in order to render an image in a virtual space. For example, in response to execution of an application (e.g., an application 520) configured to output a two-dimensional image, the electronic device 101 may request a rendering size of an app to be executed, a type of content, and position information from the spatialization manager 540, in order to generate dual image information 565 generated from the two-dimensional image (e.g., image information 563) of the application. In other words, the electronic device 101 may be configured to convert the image information 563 of the application (e.g., the application 520), except for an immersive application (e.g., an XR application 510), into the dual image information 565. The dual image information 565 may be generated based on position information and the image information 563 for an area to be rendered of the corresponding application. The electronic device 101 may execute the virtual space manager 550 in order to display the dual image information in a three-dimensional virtual space. In the present disclosure, the position information, which is a position at which an application is to be drawn in a virtual space (i.e., a position to be rendered), may indicate xyz coordinates in the three-dimensional space. The position information may be referred to as rendering area information, position area information, position information, spatial information, coordinate information, area information, depth information, three-dimensional coordinate information, rendering information, distance information, z information, and/or a term having a technical meaning equivalent thereto, in addition to position information. For the spatialization manager 540 and the virtual space manager 550, descriptions of FIG. 5 may be referred to.

The electronic device 101 may execute a resolution manager 630 in order to adaptively control a resolution in accordance with a position of an area in which the application 520 is rendered, a size of the area, and/or a characteristic of content executed in the application 520. In the present disclosure, the characteristic of the content, which indicates a type such as whether content being executed in an application requires readability (e.g., a character requires higher readability than a photograph) or whether an interest level of a user is high (e.g., a face has a higher interest level than an arm), is hereinafter referred to as a type of content and described. The type of the content may be replaced with content information, characteristic information, object information, object type information, object characteristic information, sample information, image information, an object category, an object type, an object characteristic, and/or an equivalent technical term, in addition to the type. In response to execution of the resolution manager 630, the electronic device 101 may determine a resolution for the application 520. For example, the electronic device 101 (e.g., the spatialization manager 540) may be requested for information related to the application 520 to be executed (e.g., a rendering size, a type of content, or position information), information related to foveation rendering (e.g., a foveation area, a foveation level, or a foveation method), and/or information on a user (e.g., an area of interest of the user, gaze data, an execution environment, or whether pass-through is performed) at a time point at which the application 520 is executed. The spatialization manager 540 may provide data 671 including the requested information to the resolution manager 630 (e.g., scaling or a foveation manager) based on the request.

According to an embodiment, the resolution manager 630 may be configured to determine a resolution (e.g., a final resolution (a scaling factor) or a foveation level) for image rendering of the application 520 based on data. According to an embodiment, the resolution manager 630 may determine whether a type of content to be rendered in an application is a moving image and whether it includes a character requiring readability. As an example, if the character requiring readability is included, the electronic device 101 may set the resolution to be relatively high. As an example, in a case that the content is a video or a photograph, the electronic device 101 may set a resolution to be relatively low. The resolution manager 630 may provide resolution information 672 to the application 520. The resolution information 672 may indicate a rendering setting guided to the application 520. The electronic device 101 may provide resolution information (e.g., the resolution information 672) indicating the resolution to the application 520. The resolution information may include a scaling factor, a resolution factor, a resolution value, a resolution level, and/or an equivalent technical parameter. The application 520 may change the rendering setting in accordance with the resolution information. The application 520 may change the rendering setting in accordance with the resolution information and provide an image in accordance with the changed rendering setting. Hereinafter, in the present disclosure, a scaling factor is used as an example of resolution information, but a resolution factor, a resolution adjustment parameter, a resolution scaling factor, a resolution control parameter, a resolution parameter, and/or an equivalent technical term may also be used instead of the scaling factor.

According to an embodiment, the electronic device 101 (e.g., the resolution manager 630) may determine not only the resolution for image rendering of the application 520 but also parameters for foveated rendering. For example, the electronic device 101 may determine a foveation area and/or a foveation level based on the execution of the resolution manager 630. The foveation area may indicate an area to be displayed in high resolution in foveation rendering (e.g., which may be referred to as a foveated area, a foveated portion, an area of interest, a resolution focused area, and the like). The foveation level may indicate a size of the foveated area compared to an entire area. Hereinafter, in the present disclosure, in addition to the foveation level, the foveation level may be used instead with a foveation resolution level, a resolution rendering level, a foveated rendering level, a foveated area ratio, a foveated area size, and/or an equivalent technical term. According to an embodiment, the resolution manager 630 may determine a foveation area (foveation rendering) and/or a foveation level of an image to be finally displayed. According to an embodiment, the resolution manager 630 may provide a parameter (e.g., at least a portion of the resolution information 672) to the application 520. The electronic device 101 executing the application 520 may determine a rendering setting in accordance with the provided information. The electronic device 101 may output an image layer to be finally rendered in accordance with the rendering setting. The output image layer may be converted into dual image information through the spatialization manager 540. The converted dual image information may be rendered through the virtual space manager 550.

According to an embodiment, a characteristic of content displayed on the application may be changed while the application is executed as well as at a time point at which an application is executed. For example, in a case that applications are simultaneously displayed by a user, an operation of positioning an application of interest closest to the user may be performed. At this time, efficiency of GPU resources may be increased by changing a resolution of a rendered image. For another example, an application such as an Internet browser may display various types of contents. As an example, content to be rendered may be changed from a text page requiring readability to content such as a video or a photograph not requiring readability. Even in this case, it may be required to adaptively adjust a resolution of a displayed image in accordance with a type of content. According to an embodiment, the electronic device (e.g., the spatialization manager 540) may provide a changed content characteristic to the resolution manager 630. The resolution manager 630 may change a rendering setting of the application 520 being executed through a received information. The electronic device 101 (e.g., the resolution manager 630) may provide the rendering setting to the application 520. The spatialization manager 540 may convert the image information 563 of the application 520 in accordance with a setting into the dual image information 565. The spatialization manager 540 may provide the dual image information 565 to the virtual space manager 550. As a non-limiting example, in a situation in which all applications (e.g., the XR application 510 and the application 520) are executed, in a case that a foveation level is adjusted, dual image information 651 of the XR application 520 may be provided to the virtual space manager 550 through the resolution manager 630.

The spatialization manager 540 may include a lightweight rendering engine 543 as a lightweight renderer 443 for rendering a system UI. However, the lightweight rendering engine 543 may have sufficient resources to render a system UI 530, but may not have sufficient resources to render a separate avatar. If an external rendering engine (e.g., an avatar rendering engine 660) is used, there may be difficulty since it is not compatible with a structure of the spatialization manager 540 in displaying an avatar rendering result together with the system UI 530.

For compatibility with the external rendering engine, the spatialization manager 540 may include a 3^{rd} party support module 661. For example, since various rendering requirements such as overall generation, deformation, clothes change, and motion representation of an avatar to be rendered in a second application 520-2 are not satisfied, the external rendering engine 660 may be required. The electronic device 101 may collect a rendering result of the external rendering engine (e.g., the avatar rendering engine 660) in response to execution of the 3^{rd} party support module 661 of the spatialization manager 540. Since the rendering result of the external rendering engine may not be compatible with the lightweight rendering engine 543, the rendering result may be required to be converted into a format output by the lightweight rendering engine 543 or converted to be integrated together and rendered. Through this process, a result of the external rendering engine may be finally represented through the lightweight rendering engine 543. For example, avatar data and system UI-related data output from the lightweight rendering engine 543 may be collected through the spatialization manager 540. Based on execution of the spatialization manager 540, the electronic device 101 may provide the collected data to the virtual space manager 550 in a format of the dual image information 565 for rendering to have binocular disparity.

Referring to FIG. 6B, the spatialization manager 540 may be configured to include the resolution manager 630. For example, the resolution manager 630 may be a component of the spatialization manager 540. According to an embodiment, the functions of the resolution manager 640 in FIG. 6A may be performed by the spatialization manager 540. For example, in a situation in which all applications (e.g., the XR application 510 and the application 520) are executed, in a case that a foveation level is adjusted, the dual image information 565 of the XR application 520 may be transferred to a virtual space manager 451 through the spatialization manager 540. Although not illustrated in FIG. 6B, in a case that foveation rendering is not performed (e.g., in a case that a foveation level is not set), the dual image information 565 of the XR application 520 may be directly transferred to the virtual space manager 451 without passing through the spatialization manager 540.

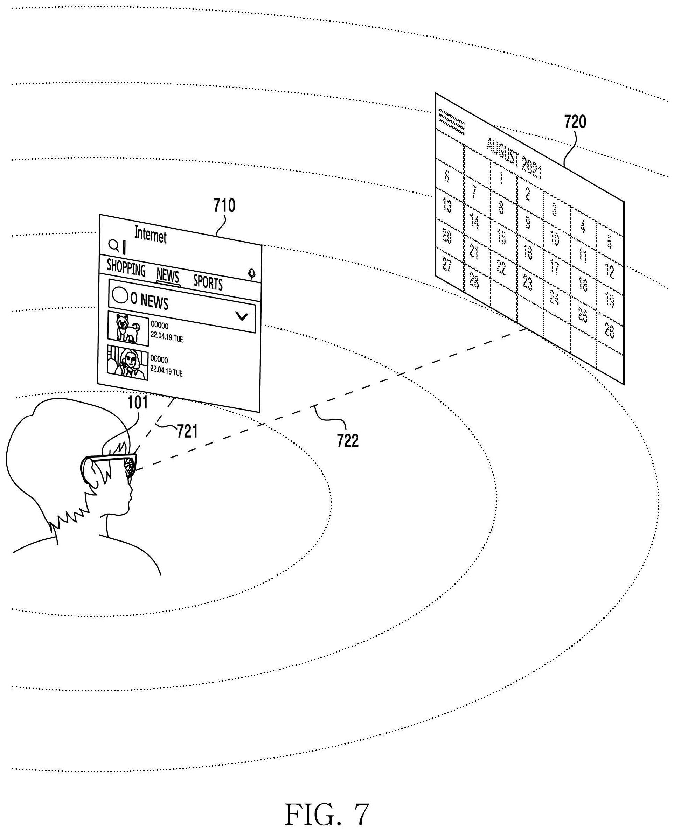

FIG. 7 illustrates examples of an application displayed in a virtual space.

Referring to FIG. 7, according to an embodiment, an electronic device 101 may execute an application. For example, the electronic device 101 may execute a first application 710. The first application 710 may be an Internet browser. The electronic device 101 may execute a second application 720. The second application 720 may be a calendar application.

According to an embodiment, the electronic device 101 may display the executed applications in a virtual space. The electronic device 101 may display, through a display, a rendering image corresponding to image information provided from each application. According to an embodiment, the electronic device 101 may determine a resolution of an image provided from an application in accordance with a size and/or a position of an area in the virtual space in which the rendering image is to be displayed (hereinafter, a rendering area). The resolution may not indicate a resolution of an output image converted through image processing (e.g., down-sampling or up-sampling) in a spatialization manager 540 or a virtual space manager 550, but may mean a resolution of an image provided at an application level. For example, the electronic device 101 may determine a resolution of an image of the first application 710. In accordance with a first depth 721, which is a distance from a reference point (e.g., a position of a user) of the electronic device 101 to a first area, the electronic device 101 may determine the resolution. The electronic device 101 may convert image information (e.g., a two-dimensional image) of the first application 710 corresponding to the determined resolution into dual image information (e.g., two two-dimensional images) for two eyes. The electronic device 101 may display, through a display (e.g., a display 250), a rendering image in the virtual space based on the dual image information. The electronic device 101 may determine a resolution of an image of the second application 720. In accordance with a second depth 722, which is a distance from the reference point (e.g., the position of the user) of the electronic device 101 to a second area, the electronic device 101 may determine the resolution. The electronic device 101 may convert image information (e.g., a two-dimensional image) of the second application 720 corresponding to the determined resolution into dual image information (e.g., two two-dimensional images) for two eyes. The electronic device 101 may display, through the display (e.g., the display 250), a rendering image in the virtual space based on the dual image information. In a three-dimensional virtual space, the second area in which the second application 720 is rendered may be positioned relatively farther than the first area in which the first application 710 is rendered. Since the second depth 722 is deeper than the first depth 721, the electronic device 101 may set the resolution for the first application 710 to be higher than the resolution for the second application 720. This is because it may be considered that a degree of interest of the user is higher as an activity is closer to the user.

According to an embodiment, in accordance with not only a position of a rendering area but also a type of content provided from an application, a resolution for the application may be determined. The resolution may not indicate a resolution of an output image converted through image processing (e.g., down-sampling or up-sampling) in the spatialization manager 540 or the virtual space manager 550, but may mean a resolution of an image provided at an application level. For example, in a case there are many characters requiring reading in content of an application, the electronic device 101 may set a resolution of the application to be relatively high. As an example, the electronic device 101 may set a resolution for an electronic book application to be higher than a resolution for a video application. The electronic device 101 (e.g., the spatialization manager 540) may obtain information on a type of content from an application (e.g., the application 520), and determine a scaling factor in accordance with a resolution for the application through a resolution manager 630. The electronic device 101 may request the application for an image in accordance with the determined scaling factor again. The electronic device 101 may obtain an image (e.g., a two-dimensional image) generated in accordance with the scaling factor from the application, and convert the generated image into dual image information having images for two eyes in a three-dimensional space. The electronic device 101 may display a rendering image based on the dual image information.

In FIG. 7, an example in which a resolution of an image provided from an application is determined in accordance with a position of the application or a characteristic of content of the application has been described, but embodiments of the present disclosure are not limited thereto. The electronic device 101 may determine the resolution of the image provided from the application based on gaze information of the user, in addition to the above-described information. For example, the electronic device 101 may obtain gaze data through at least one sensor (e.g., the gaze tracking camera 260-1 of FIG. 2B and FIG. 3A or the image sensor 421 of FIG. 4). The electronic device 101 may differently set a resolution in accordance with how far a position indicated by the gaze data is spaced apart from a position of a rendering area of each application. As an example, as a direction to the rendering area is spaced farther apart compared to a direction of the gaze data, the electronic device 101 may set a resolution of the corresponding application to be lower. For another example, in a case that the position indicated by the gaze data of the user is within a threshold range from the position of the rendering area of the application, the electronic device 101 may determine a resolution of an image provided from the application based on a depth of the rendering area. In a case that the position indicated by the gaze data of the user is out of the threshold range from the position of the rendering area of the application, the electronic device 101 may determine the resolution of the image provided from the application based on the depth of the rendering area, in accordance with a value set as a predetermined value. This is because, since it is outside an area of interest of the user, not adjusting the resolution may be efficient in terms of resource management.

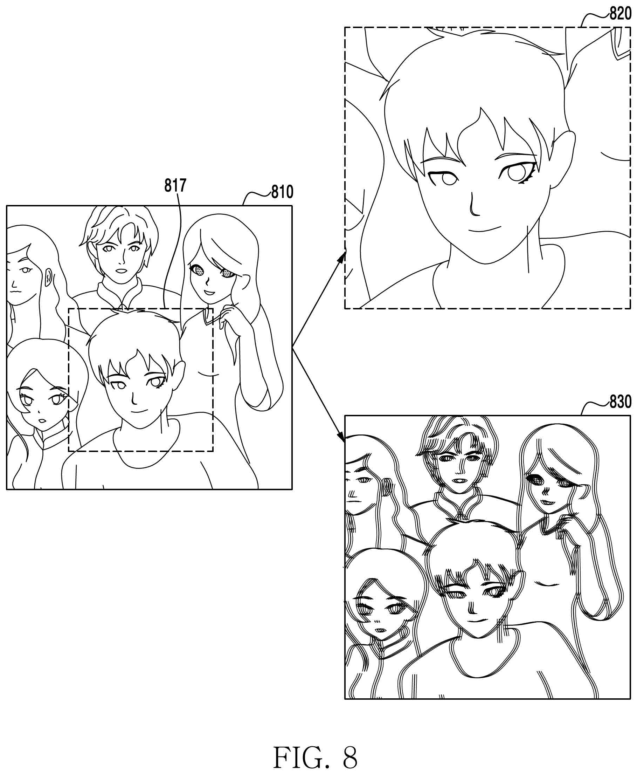

FIG. 8 illustrates an example of images for foveated rendering. Foveated rendering may mean a technology of dividing an image into a foveated area and a remaining area, synthesizing a high-resolution image corresponding to the foveated area and a low-resolution image corresponding to the remaining area, and rendering the synthesized image.

Referring to FIG. 8, an electronic device 101 may execute an application (e.g., an application 520). The application may be an application configured to provide a two-dimensional image. For example, the two-dimensional image provided through the application may be an image 810.

According to an embodiment, the electronic device 101 may perform foveated rendering on the image 810. The electronic device 101 may determine parameters for the foveated rendering. According to an embodiment, the electronic device 101 may determine a size of a foveated area 817 for the foveated rendering. For example, the electronic device 101 may determine the size of the foveated area 817 in accordance with a position of a rendering area of the application. As an example, as the rendering area is positioned farther, a resolution becomes lower, and thus the size of the foveated area 817 may be set to be relatively large in order to increase visibility of a user. For example, the electronic device 101 may determine the size of the foveated area 817 in accordance with a size of the rendering area of the application. As an example, as the size of the rendering area becomes larger, the size of the foveated area 817 may also be set to be larger. As another example, even if the size of the rendering area becomes larger, the size of the foveated area 817 may be fixed. In other words, as the size of the rendering area becomes larger, a foveation level may become smaller. Herein, the foveation level may indicate the size of the foveated area 817 compared to an entire image size. For example, the electronic device 101 may determine the size of the foveated area 817 in accordance with a type of content of the application. As an example, in a case that the content includes a face of a person, the electronic device 101 may set an area including the face as an area of interest. As another example, in a case that the content includes characters, the electronic device 101 may set an area including the characters as an area of interest. If a user input for scrolling a page is received or a user input for enlarging a specific area is received, the electronic device 101 may also change a size of the area of interest. At this time, the electronic device 101 may determine the size of the foveated area 817 corresponding to the size of the area of interest. For example, the electronic device 101 may determine the size of the foveated area 817 in accordance with gaze data of the user. The electronic device 101 may set the size of the foveated area 817 to be larger as a position of the gaze data of the user is closer to a position of the rendering area of the application.

According to an embodiment, the electronic device 101 may determine a position of the foveated area 817 for the foveated rendering. For example, the electronic device 101 may determine the position of the foveated area 817 in accordance with a type of content. As an example, in a case that the content includes a face of a person, the electronic device 101 may set a position of the face as an area of interest. As another example, in a case that the content includes characters, the electronic device 101 may set an area including the characters as an area of interest. If a user input for scrolling a page is received or a user input for enlarging a specific area is received, the electronic device 101 may also change the position of the area of interest. The electronic device 101 may determine the area of interest as the foveated area 817. For example, the electronic device 101 may determine the position of the foveated area 817 in accordance with the gaze data of the user. The electronic device 101 may set, in an entire image, an area within a threshold distance from a position of the gaze data of the user as the foveated area 817.

According to an embodiment, after a parameter(s) for the foveated rendering is determined, the electronic device 101 may provide information on the parameter(s) to the application. Through the application, the electronic device 101 may generate a synthesized image for the foveated rendering. Based on execution of the application, the electronic device 101 may obtain a first image 820 with high-resolution for the foveated area 817. Based on the execution of the application, the electronic device 101 may obtain a second image 830 with low-resolution for the remaining area. Based on the execution of the application, the electronic device 101 may obtain the synthesized image by combining the first image 820 and the second image 830. The electronic device 101 may convert the synthesized image (e.g., a two-dimensional image) into dual image information (e.g., two two-dimensional images). For example, the electronic device 101 may convert image information corresponding to the synthesized image into dual image information corresponding to images for two eyes through the spatialization manager 540 of FIG. 6A and FIG. 6B. The electronic device 101 may display rendering images corresponding to the dual image information through a display (e.g., a display 250).

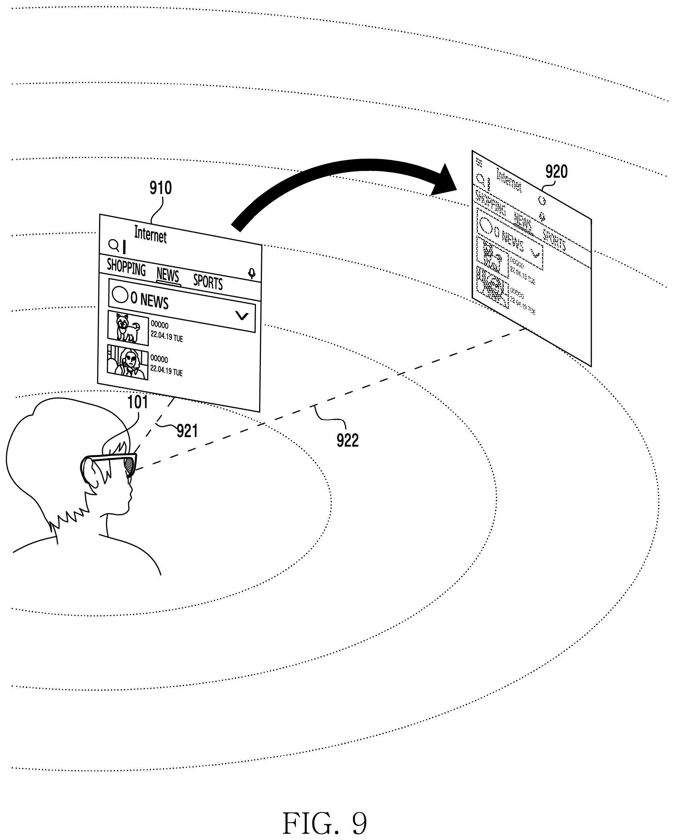

FIG. 9 illustrates an example of a resolution change in accordance with movement of an application in a virtual space.

Referring to FIG. 9, according to an embodiment, an electronic device 101 may execute an application. For example, the application may be an Internet browser. The electronic device 101 may display the executed application in a virtual space. The electronic device 101 may display, through a display, a rendering image corresponding to image information provided from the application. According to an embodiment, the electronic device 101 may determine a resolution of an image provided from the application in accordance with a size and/or a position of an area in the virtual space in which the rendering image is to be displayed (i.e., a rendering area). The resolution may not indicate a resolution of an output image converted through image processing (e.g., down-sampling or up-sampling) in a spatialization manager 540 or a virtual space manager 550, but may mean a resolution of an image provided at an application level.

The electronic device 101 may receive a user input for moving the rendering area of the application positioned at a first position 910 to a second position 920. Before the user input is received, a resolution of an image of the application may be a first value. For example, the first value may be determined in accordance with a first depth 921, which is a distance from a reference point of the electronic device 101 (e.g., a position of a user) to the first position.

The electronic device 101 (e.g., the spatialization manager 540) may detect a position change of the application. As a position of the application is changed, the application may be configured to inquire to the spatialization manager 540 regarding display quality in accordance with the changed position. The electronic device 101 (e.g., the spatialization manager 540) may obtain position information of the application in response to the user input. For example, the electronic device 101 may obtain information on a second depth 922, which is a distance from the reference point of the electronic device 101 (e.g., the position of the user) to the second position. As a non-limiting example, in a case that a resolution manager 630 is positioned outside the spatialization manager 540, the spatialization manager 540 may provide the information on the second depth 922 to the resolution manager 630. The electronic device 101 (e.g., the spatialization manager 540 or the resolution manager 630) may change a resolution in accordance with the second depth 922.

The electronic device 101 (e.g., the spatialization manager 540 or the resolution manager 630) may provide resolution information (e.g., resolution information 672) for the application to the application in response to the inquiry of the application. The electronic device 101 may provide resolution information (e.g., the resolution information 672) indicating the changed resolution to the application.

The electronic device 101 may generate, through the executing application, a two-dimensional image of the application in accordance with the changed resolution of the resolution information. Even if the rendering area of the application is moved, the electronic device 101 may obtain a two-dimensional image in accordance with a resolution determined at an application level by performing again a processing procedure in an order of the spatialization manager 540, the resolution manager 630, and the application 520 of FIG. 6A and FIG. 6B. The electronic device 101 may convert image information corresponding to the generated two-dimensional image into dual image information (e.g., two two-dimensional images) for two eyes. The electronic device 101 may display, through a display (e.g., a display 250), a rendering image in the virtual space based on the dual image information.

In FIG. 9, an example in which rendering quality is changed as the rendering area of the application in accordance with the user input moves has been described, but embodiments of the present disclosure are not limited thereto. Not only a case in which the rendering area of the application moves, but also a case in which, as the user moves, a distance between the user and the rendering area of the application is changed, and thus rendering quality for the application is changed may be understood as an embodiment of the present disclosure. For example, in response to the movement of the user, the electronic device 101 may detect a change in depth information for the rendering area of the application. The application may inquire to the spatialization manager 540 of the electronic device 101 regarding the display quality in accordance with the change in the depth information and information related to display quality (e.g., the resolution information 672 indicating the changed resolution). The spatialization manager 540 (or the resolution manager 630) may provide the information related to the display quality (e.g., the resolution information 672 indicating the changed resolution) to the application. The electronic device 101 may be configured to output, through the application, a rendering image in accordance with the display quality.

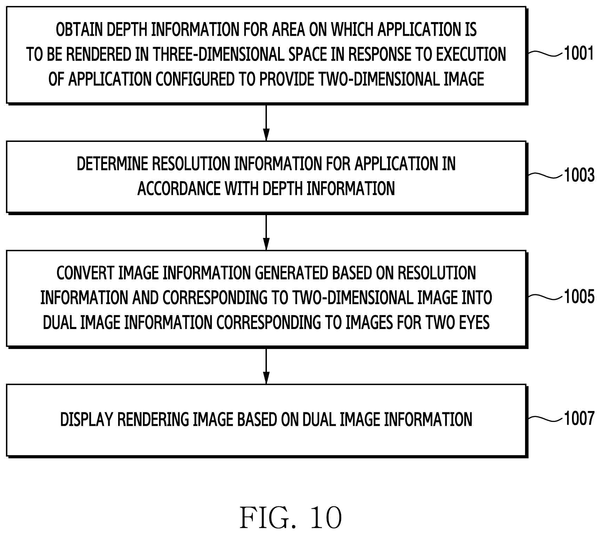

FIG. 10 illustrates an operation flow of an electronic device (e.g., an electronic device 101 or a wearable device 101) for controlling a resolution of an application in a virtual space.

Referring to FIG. 10, in operation 1001, in response to execution of an application (e.g., an Internet browser, a gallery, a calendar, a setting application, or a two-dimensional map) configured to provide a two-dimensional image, the electronic device 101 (e.g., a spatialization manager 540) may obtain depth information for an area on which the application is to be rendered in a three-dimensional space (hereinafter, a rendering area). The electronic device 101 (e.g., the spatialization manager 540) may obtain the depth information for controlling a resolution of the two-dimensional image in the three-dimensional space. Herein, the depth information may indicate a distance (e.g., a depth, a Z coordinate, or a Z-depth) between a user of the electronic device 101 and the rendering area in the three-dimensional virtual space. As a non-limiting example, if a position of the rendering area is changed in accordance with execution of another application or an input of the user, the electronic device 101 may obtain the depth information again.

In operation 1003, the electronic device 101 (e.g., a resolution manager 630) may determine resolution information for the application in accordance with the depth information. The resolution for the application may not indicate a resolution of an output image converted through separate image processing (e.g., down-sampling of the spatialization manager 540 or up-sampling of the virtual space manager 550 of FIG. 5), but may mean a resolution of an image provided from the application at an application level.

The electronic device 101 (e.g., the resolution manager 630) may determine the resolution information for the application in accordance with the depth information of the application. For example, as the rendering area of the application is closer to the user, the electronic device 101 may set the resolution for the application to be higher. A method of setting a resolution in accordance with a position of the rendering area may be variously configured. For example, the electronic device 101 may determine the resolution of the application through a function set to be inversely proportional to a depth of the rendering area. For another example, the electronic device 101 may pre-store a plurality of resolution levels in accordance with a plurality of distance ranges. The electronic device 101 may identify a distance range corresponding to the depth of the rendering area among the plurality of distance ranges. The electronic device 101 may identify a resolution level corresponding to the distance range. For still another example, the electronic device 101 may determine the resolution for the application through a condition, a function, or a learning model in which not only the position of the rendering area but also a size of the rendering area, information on a type of content of the application, a user input, the number of other application(s) being executed, a type of another application being executed, and/or gaze data of the user are considered.

In operation 1005, the electronic device 101 (e.g., the spatialization manager 540) may convert image information generated in accordance with the resolution information and corresponding to the two-dimensional image into dual image information corresponding to images for two eyes. The electronic device 101 may generate the two-dimensional image based on the resolution information. The electronic device 101 (e.g., the spatialization manager 540) may generate, through the application, the image information having the two-dimensional image in accordance with the resolution information. The electronic device 101 (e.g., the spatialization manager 540) may convert the image information into the dual image information. The dual image information may include first image information for a left eye (e.g., information on a two-dimensional image to be displayed on the left eye) and second image information for a right eye (e.g., information on a two-dimensional image to be displayed on the right eye).

In operation 1007, the electronic device 101 may display a rendering image based on the dual image information. The electronic device 101 (e.g., the virtual space manager 550) may obtain the dual image information converted by the spatialization manager 540. The electronic device 101 (e.g., the virtual space manager 550) may provide rendering images corresponding to the dual image information to a display buffer. For example, the electronic device 101 may display, in a virtual space, another application, an avatar, and/or a system UI (e.g., a system UI 530) simultaneously with an image for the application. The electronic device 101 may obtain the rendering images by synthesizing image layers corresponding to the dual image information with layers for the another application, the avatar, and/or the system UI (e.g., the system UI 530). The electronic device 101 may display the rendering images through a display (e.g., a first display 250-1 or a second display 250-2).

Through FIG. 5 to FIG. 10, embodiments in which rendering quality for an application is determined in accordance with depth information for an area on which the application is to be rendered have been described. However, embodiments of the present disclosure are not limited thereto. According to an embodiment, a rendering area that should be maintained regardless of a distance between applications may also be set. For example, in a case of an advertisement or a warning phrase, certain rendering quality (e.g., maintained at a resolution of a certain value or more) may be required regardless of a distance between a user and an application. The electronic device 101 (e.g., the spatialization manager 540) may be configured not to change a resolution or a rendering setting even if depth information of the application is changed, based on information on a content type of the application and/or a type of the application. In other words, the electronic device 101 may set exception handling of quality change in accordance with depth information for a specific type of content or a designated type of application.

In the present disclosure, even in a case that an application configured to display a two-dimensional image is executed, a technology for displaying an image without an image breakage phenomenon due to a resolution while maintaining readability has been described. By controlling a resolution in accordance with a distance of a rendering area and controlling a foveated level for foveated rendering, the electronic device 101 may adjust quality of content to be displayed on a built-in display and provide content having higher visibility to a user. In addition, through a separate support module (e.g., a 3^{rd} party support module 661), avatar rendering and the system UI 530 may smoothly operate simultaneously in a structure of the spatialization manager 540-virtual space manager 550. By appropriately setting the resolution and the foveated level, optimization may be achieved between use of a resource (e.g., a GPU resource) and visibility of the user, which are in a trade-off relationship.

The effects that may be obtained from the present disclosure are not limited to those described above, and any other effects not mentioned herein will be clearly understood by those having ordinary knowledge in the art to which the present disclosure belongs, from the following description.

In embodiments, an electronic device is provided. The electronic device may comprise at least one display, at least one processor comprising processing circuitry, and memory, comprising one or more storage mediums, storing instructions. The instructions, when executed by the at least one processor individually or collectively, may cause the electronic device to, in response to execution of an application configured to provide a two-dimensional image, obtain depth information for an area on which the application is to be rendered in a three-dimensional space, determine resolution information for the application in accordance with the depth information for the area, convert image information corresponding to the two-dimensional image of the application, generated in accordance with the resolution information, into dual image information corresponding to images for two eyes, and display, through the at least one display, a rendering image based on the dual image information.

For example, the instructions, when executed by the at least one processor individually or collectively, may cause the electronic device to receive a user input for changing a position of the area on which the application is to be rendered in the three-dimensional space from a first position to a second position, obtain information on the second position in response to the user input, change a resolution in accordance with the information on the second position, convert second image information corresponding to the two-dimensional image, generated in accordance with resolution information indicating the changed resolution, into second dual image information corresponding to images for two eyes, and display, through the at least one display, a second rendering image based on the second dual image information.

For example, the depth information for the area on which the application is to be rendered may indicate a depth from a reference point to an area on which the application is to be rendered in the three-dimensional space. A resolution in accordance with the resolution information may be determined to be lower as the depth from the reference point to the area on which the application is to be rendered becomes deeper.

For example, the instructions, when executed by the at least one processor individually or collectively, may cause the electronic device to, in response to execution of a second application configured to provide a two-dimensional image, obtain second depth information for a second area on which the second application is to be executed in the three-dimensional space, determine second resolution information indicating a resolution for the second application in accordance with the second depth information for the second area, convert second image information corresponding to the two-dimensional image of the second application, generated in accordance with the second resolution information, into second dual image information corresponding to images for two eyes, and display, through the at least one display, a second rendering image based on the second dual image information. In a case that a depth indicated by the depth information is greater than a depth indicated by the second depth information, the resolution of the second application in accordance with the second resolution information may be higher than the resolution of the application in accordance with the resolution information.

For example, the instructions, when executed by the at least one processor individually or collectively, may cause the electronic device to, in response to the execution of the application, identify a type of content of the application, and determine the resolution information for the application based on information on the type of the content of the application and the depth information for the area. The information on the type of the content of the application may indicate whether a character is included in an area of the content.

For example, the instructions, when executed by the at least one processor individually or collectively, may cause the electronic device to, based on identifying that content being executed in the application is changed, change a resolution indicating the resolution based on information on a type of the changed content, generate modified image information corresponding to the two-dimensional image of the application in accordance with the resolution information indicating the changed resolution, convert the modified image information into modified dual image information corresponding to images for two eyes, and display a rendering image based on the modified dual image information.

For example, the instructions, when executed by the at least one processor individually or collectively, may cause the electronic device to, based on the depth information for the area, determine a foveation level for foveated rendering of the two-dimensional image, based on the resolution information and the foveation level, generate the image information corresponding to the two-dimensional image of the application, and convert the generated image information into the dual image information corresponding to the images for two eyes. The foveation level may indicate a size of a foveated area with respect to the foveated area with high-resolution and a remaining area with low-resolution of the two-dimensional image.

For example, the foveation level may be determined based on depth information for the area, information on a type of content on the application, and gaze data of a user. The resolution information may indicate a resolution of the foveated area and a resolution of the remaining area. The gaze data of the user may be obtained through an image sensor of the electronic device.

For example, the instructions, when executed by the at least one processor individually or collectively, may cause the electronic device to, in a case that a position of the area is within a threshold range from a position in accordance with the gaze data of the user, determine a first value as the foveation level, and, in a case that the position of the area is out of the threshold range from the position in accordance with the gaze data of the user, determine a second value as the foveation level. A size of the foveated area at the foveation level corresponding to the first value may be larger than a size of the foveated area at the foveation level corresponding to the second value.

For example, the instructions, when executed by the at least one processor individually or collectively, may cause the electronic device to, in a case that a position of the area is within a threshold range from a position in accordance with the gaze data of the user, determine the resolution information in accordance with a depth indicated by the depth information, and, in a case that the position of the area is out of the threshold range from the position in accordance with the gaze data of the user, determine the resolution information as a predetermined value.

For example, the application may be configured to provide the image information by changing rendering quality of the two-dimensional image based on the resolution information. The dual image information may be converted from the provided image information in accordance with the changed rendering quality.

For example, the resolution information may comprise resolution information.

In embodiments, a method performed by an electronic device is provided. The method may comprise, in response to execution of an application configured to provide a two-dimensional image, obtaining depth information for an area on which the application is to be rendered in a three-dimensional space, determining resolution information for the application in accordance with the depth information for the area, converting image information corresponding to the two-dimensional image of the application, generated in accordance with the resolution information, into dual image information corresponding to images for two eyes, and displaying a rendering image based on the dual image information.

For example, the method may comprise receiving a user input for changing a position of the area on which the application is to be rendered in the three-dimensional space from a first position to a second position, obtaining information on the second position in response to the user input, changing a resolution in accordance with the information on the second position, converting second image information corresponding to the two-dimensional image, generated in accordance with resolution information indicating the changed resolution, into second dual image information corresponding to images for two eyes, and displaying a rendering image based on the second dual image information.

For example, the depth information for the area on which the application is to be rendered may indicate a depth from a reference point to an area on which the application is to be rendered in the three-dimensional space. A resolution in accordance with the resolution information may be determined to be lower as the depth from the reference point to the area on which the application is to be rendered becomes deeper.

For example, the method may comprise, in response to execution of a second application configured to provide a two-dimensional image, obtaining second depth information for a second area on which the second application is to be executed in the three-dimensional space, determining second resolution information indicating a resolution for the second application in accordance with the second depth information for the second area, converting second image information corresponding to the two-dimensional image of the second application, generated in accordance with the second resolution information, into second dual image information corresponding to images for two eyes, and displaying a second rendering image based on the second dual image information. In a case that a depth indicated by the depth information is greater than a depth indicated by the second depth information, the resolution of the second application in accordance with the second resolution information may be higher than the resolution of the application in accordance with the resolution information.

For example, determining the resolution information may comprise, in response to the execution of the application, identifying a type of content of the application, and determining resolution information for the application based on information on the type of the content of the application and the depth information for the area. The information on the type of the content of the application may indicate whether a character is included in an area of the content.

For example, the method may comprise, based on identifying that content being executed in the application is changed, changing a resolution indicating the resolution based on information on a type of the changed content, generating modified image information corresponding to the two-dimensional image of the application in accordance with the resolution information indicating the changed resolution, converting the modified image information into modified dual image information corresponding to images for two eyes, and displaying a rendering image based on the modified dual image information.

For example, generating the dual image information may comprise, based on the depth information for the area, determining a foveation level for foveated rendering of the two-dimensional image, based on the resolution information and the foveation level, generating the image information corresponding to the two-dimensional image of the application, and converting the generated image information into the dual image information for displaying the images for two eyes. The foveation level may indicate a size of a foveated area with respect to the foveated area with high-resolution and a remaining area with low-resolution of the two-dimensional image.

For example, the foveation level may be determined based on depth information for the area, information on a type of content on the application, and gaze data of a user. The resolution information may indicate a resolution of the foveated area and a resolution of the remaining area. The gaze data of the user may be obtained through an image sensor of the electronic device.

For example, determining the foveation level may comprise, in a case that a position of the area is within a threshold range from a position in accordance with the gaze data of the user, determining a first value as the foveation level, and, in a case that the position of the area is out of the threshold range from the position in accordance with the gaze data of the user, determining a second value as the foveation level. A size of the foveated area at the foveation level corresponding to the first value may be larger than a size of the foveated area at the foveation level corresponding to the second value.

In embodiments, a non-transitory computer readable medium is provided. The non-transitory computer readable medium may comprise memory, comprising one or more storage mediums, configured to store instructions. The instructions, when executed by at least one processor individually or collectively, may cause an electronic device to, in response to execution of an application configured to provide a two-dimensional image, obtain depth information for an area on which the application is to be rendered in a three-dimensional space, determine resolution information for the application in accordance with the depth information for the area, convert image information corresponding to the two-dimensional image of the application, generated in accordance with the resolution information, into dual image information corresponding to images for two eyes, and display a rendering image in accordance with the dual image information.

In embodiments, an electronic device is provided. The electronic device may comprise at least one display and at least one processor comprising processing circuitry. The at least one processor may be configured to, in response to execution of an application configured to provide a two-dimensional image, obtain depth information for an area on which the application is to be rendered in a three-dimensional space, determine resolution information for the application in accordance with the depth information for the area, convert image information corresponding to the two-dimensional image of the application, generated in accordance with the resolution information, into dual image information corresponding to images for two eyes, and display, through the at least one display, a rendering image based on the dual image information.

In embodiments, an electronic device is provided. The electronic device may comprise a spatialization manager for obtaining spatial information for an application, a resolution manager for determining a resolution for the application, and a virtual space manager for providing an image for the application in a virtual space to a display buffer. The spatialization manager may be configured to obtain depth information for an area on which the application is to be rendered in a three-dimensional space. The resolution manager may be configured to, in accordance with the depth information for the area on which the application is to be rendered, determine resolution information for the application, and provide the resolution information for the determined application to the application. The spatialization manager may be configured to, by the application, convert image information generated in accordance with the resolution information into dual image information corresponding to images for two eyes. The virtual space manager may be configured to provide rendering images in accordance with the dual image information to the display buffer.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

For one or more embodiments, at least one of components described in one or more of the preceding drawings may be configured to perform one or more operations, techniques, processes, and/or methods as described in the present disclosure. For example, a processor (e.g., a baseband processor) described in the present disclosure in association with one or more of the preceding drawings may be configured to operate according to one or more examples described in the present disclosure. For another example, a circuit associated with user equipment (UE), a base station, a network element, or the like, as described above in association with one or more of the preceding drawings, may be configured to operate according to one or more examples described herein.

Any of the embodiments described above may be combined with any other embodiment (or a combination of embodiments) unless explicitly stated otherwise. The foregoing description of one or more implementations is provided for illustration and explanation, but is not intended to limit the scope of the embodiments or to be exhaustive to the precise forms disclosed. Modifications and variations are possible in light of the above teachings or may be obtained from practice of various embodiments.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one display;
at least one processor comprising processing circuitry; and
memory, comprising one or more storage mediums, storing instructions that, when executed by the at least one processor individually or collectively, cause the electronic device to:
in response to execution of an application configured to provide a two-dimensional image, obtain depth information for an area on which the application is to be rendered in a three-dimensional space;
determine resolution information for the application in accordance with the depth information for the area;
convert image information corresponding to the two-dimensional image of the application, generated in accordance with the resolution information, into dual image information corresponding to images for two eyes; and
display, through the at least one display, a rendering image based on the dual image information.

2. The electronic device of claim 1, wherein the instructions, when executed by the at least one processor individually or collectively, cause the electronic device to:
receive a user input for changing a position of the area on which the application is to be rendered in the three-dimensional space from a first position to a second position;
obtain information on the second position in response to the user input;
change a resolution in accordance with the information on the second position;
convert second image information corresponding to the two-dimensional image, generated in accordance with resolution information indicating the changed resolution, into second dual image information corresponding to images for two eyes; and
display, through the at least one display, a second rendering image based on the second dual image information.

3. The electronic device of claim 1,
wherein the depth information for the area on which the application is to be rendered in the three-dimensional space indicates a depth from a reference point to an area on which the application is to be rendered in the three-dimensional space, and
wherein a resolution in accordance with the resolution information is determined to be lower as the depth from the reference point to the area on which the application is to be rendered becomes increases.

4. The electronic device of claim 1, wherein the instructions, when executed by the at least one processor individually or collectively, cause the electronic device to:
in response to execution of a second application configured to provide a two-dimensional image, obtain second depth information for a second area on which the second application is to be executed in the three-dimensional space;
determine second resolution information indicating a resolution for the second application in accordance with the second depth information for the second area;
convert second image information corresponding to the two-dimensional image of the second application, generated in accordance with the second resolution information, into second dual image information corresponding to images for two eyes; and
display, through the at least one display, a second rendering image based on the second dual image information,
wherein, in a case that a depth indicated by the depth information is greater than a depth indicated by the second depth information, the resolution of the second application in accordance with the second resolution information is higher than the resolution of the application in accordance with the resolution information.

5. The electronic device of claim 1, wherein the instructions, when executed by the at least one processor individually or collectively, cause the electronic device to:
in response to the execution of the application, identify a type of content of the application; and
determine the resolution information indicating a resolution for the application based on information on the type of the content of the application and the depth information for the area, and
wherein the information on the type of the content of the application indicates whether a character is included in an area of the content.

6. The electronic device of claim 1, wherein the instructions, when executed by the at least one processor individually or collectively, cause the electronic device to:
based on identifying that content being executed in the application is changed, change a resolution based on information on a type of the changed content;
generate modified image information corresponding to the two-dimensional image of the application in accordance with the resolution information indicating the changed resolution;
convert the modified image information into modified dual image information corresponding to images for two eyes; and
display, through the at least one display, a rendering image based on the modified dual image information.

7. The electronic device of claim 1, wherein the instructions, when executed by the at least one processor individually or collectively, cause the electronic device to:
based on the depth information for the area, determine a foveation level for foveated rendering of the two-dimensional image;
based on the resolution information and the foveation level, generate the image information corresponding to the two-dimensional image of the application; and
convert the generated image information into the dual image information corresponding to the images for two eyes, and
wherein the foveation level indicates a size of a foveated area with respect to the foveated area with high-resolution and a remaining area with low-resolution of the two-dimensional image.

8. The electronic device of claim 7,
wherein the foveation level is determined based on depth information for the area, information on a type of content on the application, and gaze data of a user,
wherein the resolution information indicates a resolution of the foveated area and a resolution of the remaining area, and
wherein the gaze data of the user is obtained through an image sensor of the electronic device.

9. The electronic device of claim 7, wherein the instructions, when executed by the at least one processor individually or collectively, cause the electronic device to:
in a case that a position of the area is within a threshold range from a position in accordance with the gaze data of the user, determine a first value as the foveation level, and
in a case that the position of the area is out of the threshold range from the position in accordance with the gaze data of the user, determine a second value as the foveation level, and
wherein a size of the foveated area at the foveation level corresponding to the first value is larger than a size of the foveated area at the foveation level corresponding to the second value.

10. The electronic device of claim 1, wherein the instructions, when executed by the at least one processor individually or collectively, cause the electronic device to:
in a case that a position of the area is within a threshold range from a position in accordance with the gaze data of the user, determine the resolution information in accordance with a depth indicated by the depth information, and
in a case that the position of the area is out of the threshold range from the position in accordance with the gaze data of the user, determine the resolution information as a predetermined value.

11. The electronic device of claim 1,
wherein the application is configured to provide the image information by changing rendering quality of the two-dimensional image based on the resolution information, and
wherein the dual image information is converted from the provided image information in accordance with the changed rendering quality.

12. The electronic device of claim 1, wherein the resolution information comprises a scaling factor.

13. A method performed by an electronic device, the method comprising:
in response to execution of an application configured to provide a two-dimensional image, obtaining depth information for an area on which the application is to be rendered in a three-dimensional space;
determining resolution information for the application in accordance with the depth information for the area;
converting image information corresponding to the two-dimensional image of the application, generated in accordance with the resolution information, into dual image information corresponding to images for two eyes; and
displaying a rendering image based on the dual image information.

14. The method of claim 13, further comprising:
receiving a user input for changing a position of the area on which the application is to be rendered in the three-dimensional space from a first position to a second position;
obtaining information on the second position in response to the user input;
changing a resolution in accordance with the information on the second position;
converting second image information corresponding to the two-dimensional image, generated in accordance with resolution information indicating the changed resolution, into second dual image information corresponding to images for two eyes; and
displaying a second rendering image based on the second dual image information.

15. The method of claim 13,
wherein the depth information for the area on which the application is to be rendered in the three-dimensional space indicates a depth from a reference point to an area on which the application is to be rendered in the three-dimensional space, and
wherein a resolution in accordance with the resolution information is determined to be lower as the depth from the reference point to the area on which the application is to be rendered becomes increases.
